# EUROPEAN PATENT APPLICATION

(11) **EP 4 637 126 A1**
(43) Date of publication of application: **22.10.2025**
(21) Application number: 23917158.0
(22) Date of filing: 09.11.2023
(51) Int. Cl.: H04M 1/72454, G10K 11/175

(54) **SOUND CHANNEL MODE SWITCHING METHOD, DEVICE, AND STORAGE MEDIUM**

(30) Priority: 17.01.2023 CN 202310090577
(71) Applicant: Honor Device Co., Ltd., Shenzhen, Guangdong 518040 (CN)
(72) Inventor: CUI, Xiaoqing, Shenzhen, Guangdong 518040 (CN); SHE, Yanxiong, Shenzhen, Guangdong 518040 (CN); YU, Fei, Shenzhen, Guangdong 518040 (CN); WEN, Jiabo, Shenzhen, Guangdong 518040 (CN)
(74) Representative: Gill Jennings & Every LLP
(86) International application number: PCT/CN2023/130635
(87) International publication number: WO 2024/152690

(57) **Abstract**

This application provides a channel mode switching method, a device, and a storage medium, and relates to the field of audio processing technologies. When a user uses an electronic device to make a real-time voice call with another device, or exchange voice chat messages with another device, the electronic device can detect a volume change in real time. When a specified current volume is low, a private channel mode may be used. This reduces far-field loudness when the electronic device plays voice content, reduces leakage of the voice content, and can also maintain near-field loudness when the electronic device plays the voice content and ensure that listening effect of the user is substantially unchanged. When a specified current volume is high, the user may no longer need to protect private information, and may use a standard channel mode to play sound at a high volume in both a near field and a far field. **In** this method, a playing volume can be adjusted depending on an actual requirement, and channel mode switching can be performed in real time. **In** this way, hearing experience of the user can be ensured, and privacy and security of the user can be protected.

## Description

This application claims priority to Chinese Patent Application No. 202310090577.5, filed with the China National Intellectual Property Administration on January 17, 2023 and entitled "CHANNEL MODE SWITCHING METHOD, DEVICE, AND STORAGE MEDIUM", which is incorporated herein by reference in its entirety.

### TECHNICAL FIELD

This application relates to the field of audio processing technologies, and in particular, to a channel mode switching method, a device, and a storage medium.

### BACKGROUND

Voice communication is an important function of an electronic device.

At present, voice communication functions include real-time voice calls, voice chat messages, and the like. When a user uses an electronic device to make a real-time voice call or exchange voice chat messages, the electronic device may play a sound signal through an earpiece. However, when the user holds the electronic device in a crowded place, for example, an elevator, a shopping mall, or a plaza, a sound signal played through the earpiece may be heard by other surrounding people. As a result, private information of the user is leaked.

### SUMMARY

This application provides a channel mode switching method, a device, and a storage medium, to resolve a technical problem that private information of a user is leaked because voice communication content may be heard by other surrounding people.

To achieve the foregoing objective, the following technical solutions are used in this application.

According to a first aspect, an embodiment of this application provides a channel mode switching method. The method includes:
receiving a first operation of a user; displaying an interface of a call application in response to the first operation; receiving a second operation of the user; playing a voice signal of the call application at a first volume in response to the second operation; receiving a third operation of the user; and when the third operation is an operation for increasing the first volume to a second volume, playing the voice signal at the second volume in a standard channel mode in response to the third operation, or when the third operation is an operation for decreasing the first volume to a third volume, playing the voice signal at the third volume in a private channel mode in response to the third operation, where the second volume is greater than the first volume, and the third volume is less than the first volume.

In the foregoing solution, in a scenario in which an electronic device plays the voice signal of the call application, the electronic device may increase or decrease, based on a volume adjustment operation of the user, a volume at which the voice signal is played, and perform switching on a channel mode for playing the voice signal. When the volume of the electronic device is decreased, the private channel mode may be used, to reduce leakage of voice communication content and ensure security and privacy of private information. When the volume of the electronic device is increased, privacy may not need to be protected, and in this case, the standard channel mode is used to play sound at a high volume, to ensure listening experience of the user.

Generally, when the user listens to the voice signal played by the electronic device, if there are other people around the user, but the user does not expect private information to be heard by other people, the user may subconsciously decrease the volume at which the voice signal is played. In this case, the electronic device decreases the volume, and also switches the channel mode to the private channel mode. This reduces leakage of voice communication content, and protects privacy and security of the user.

In a possible implementation, the voice signal may also be referred to as an audio signal. The call application may be an application that has a high privacy requirement for a voice signal, for example, a phone application, a voice chat application, a video chat application, or a social application with a voice message function. For the phone application, the voice chat application, the video chat application, and the like, the voice signal may be specifically an audio signal including real-time voice call content. For the social application and the like with voice message functions, the voice signal may be specifically an audio signal corresponding to one or more voice messages.

In a possible implementation, this application provides two channel modes. One is a standard channel mode. For example, in this mode, an earpiece may be used to play sound. When private information does not need to be protected, the standard channel mode may be used. The other one is a private channel mode. For example, in this mode, a screen sound emitting device may be used to vibrate to emit sound, or two sound emitting components may be used to emit two audio signals with different phases. When private information needs to be protected, the private channel mode may be used.

The two channel modes have the following relationship in a far field: When the electronic device plays the voice signal at a fourth volume in the standard channel mode, loudness at a first location is first loudness, or when the electronic device plays the voice signal at a fifth volume in the private channel mode, loudness at a first location is second loudness. A distance between the first location and the electronic device is greater than or equal to a preset distance, the second loudness is less than the first loudness, and the fourth volume is the same as the fifth volume. In an example, the first loudness and the second loudness may satisfy the following relationship: A difference between the first loudness and the second loudness is greater than or equal to a first difference. It should be understood that, when the electronic device uses the same volume, in comparison with the standard channel mode, sound leakage reduction processing is performed in the private channel mode, and therefore far-field loudness of the voice signal is reduced. This reduces sound leakage of the electronic device, reduces the far-field loudness, and reduces leakage of voice communication content.

The two channel modes have the following relationship in a near field: When the electronic device plays the voice signal at the fourth volume in the standard channel mode, loudness at a second location is third loudness, or when the electronic device plays the voice signal at the fifth volume in the private channel mode, loudness at a second location is fourth loudness. A distance between the second location and the electronic device is less than the preset distance. The third loudness and the fourth loudness satisfy the following relationship: A difference between the third loudness and the fourth loudness is less than or equal to a second difference, and the second difference is less than the first difference. It should be understood that, when the electronic device uses the same volume, in comparison with the standard channel mode, near-field loudness can be maintained in the private channel mode. This ensures hearing experience of the user.

In a possible implementation, for an application that has a low privacy requirement for an audio/video signal, for example, a music player, a video player, a game application, or a map application with a voice navigation function, the following playing method may be used: receiving a fourth operation of the user; displaying an interface of a first application in response to the fourth operation, where the first application is a non-call application installed on the electronic device; receiving a fifth operation of the user; playing an audio/video signal in the standard channel mode or a speaker mode in response to the fifth operation; and if a sixth operation of the user for volume adjustment is received when the audio/video signal is played in the standard channel mode, playing the audio/video signal at an adjusted volume still in the standard channel mode in response to the sixth operation, or if a seventh operation of the user for volume adjustment is received when the audio/video signal is played in the speaker mode, playing the audio/video signal at an adjusted volume still in the speaker mode in response to the seventh operation. It should be understood that, for a non-call application that has a low privacy requirement for an audio/video signal, the audio/video signal may be played in a conventional standard channel mode or speaker mode without a need to use a private channel mode to protect privacy. This ensures listening experience of the user in different scenarios. In addition, when the audio/video signal is played in the standard channel mode or the speaker mode, only the volume is increased or decreased based on the volume adjustment operation of the user, and mode switching is not performed. This better complies with a user requirement during use of the non-call application.

In a possible implementation, the playing a voice signal of the call application at a first volume in response to the second operation includes: in response to the second operation, generating a first event of playing the voice signal; when it is determined that a channel type of the first event is a call channel type, obtaining a historical volume, determining the first volume based on the historical volume, and setting a channel mode to the standard channel mode or the private channel mode, where the historical volume is a volume at which a voice signal of the call application is played in response to a previous event of the first event, and the first volume is less than or equal to the historical volume; and playing the voice signal at the first volume in the standard channel mode or the private channel mode.

It should be understood that, after the first event of establishing a voice call or requesting to play a voice message is generated and broadcast, the electronic device may determine that the channel type of the first event is the call channel type. Therefore, a volume of a current call is adjusted by using the historical volume, so that the volume of the current voice call may not exceed a preset volume. In this way, hearing experience of the user can be ensured, and privacy and security of the user can be protected.

In a possible implementation, the determining the first volume based on the historical volume includes: using the historical volume as the first volume if the historical volume is less than or equal to a preset volume; or using a preset volume as the first volume if the historical volume is greater than the preset volume; where the preset volume is greater than a minimum volume, and the preset volume is less than a maximum volume.

It should be understood that, when the historical volume is low, the volume of the current voice call may be set to be consistent with the historical volume. This may be more in line with a listening habit of the user. However, when the historical volume is high, if the volume of the current voice call is set to a large value, privacy of the user may be leaked or other surrounding people may be disturbed. In this case, the volume of the current voice call may be appropriately decreased, so that the maximum current volume does not exceed the preset volume.

In a possible implementation, the setting a channel mode to the standard channel mode or the private channel mode includes: selecting, from the standard channel mode or the private channel mode based on preset priorities of channel modes, a historical channel mode, or external ambient noise, a channel mode that satisfies a condition, and using the channel mode that satisfies the condition, where the historical channel mode is a channel mode used when the voice signal of the call application is played in response to the previous event of the first event.

Example 1: Selecting, based on the preset priorities of the channel modes, the channel mode that satisfies the condition may be implemented in the following manner: determining, if a preset priority of the private channel mode is higher than a preset priority of the standard channel mode, that the private channel mode is the channel mode that satisfies the condition, or determining, if a preset priority of the standard channel mode is higher than a preset priority of the private channel mode, that the standard channel mode is the channel mode that satisfies the condition.

Example 2: Selecting, based on the historical channel mode, the channel mode that satisfies the condition may be implemented in the following manner: determining, if the historical channel mode is the private channel mode, that the private channel mode is the channel mode that satisfies the condition, or determining, if the historical channel mode is the standard channel mode, that the standard channel mode is the channel mode that satisfies the condition.

Example 3: Selecting, based on the external ambient noise, the channel mode that satisfies the condition may be implemented in the following manner: determining, if loudness of the external ambient noise is greater than or equal to preset loudness, that the private channel mode is the channel mode that satisfies the condition, or determining, if loudness of the external ambient noise is less than preset loudness, that the standard channel mode is the channel mode that satisfies the condition.

It should be understood that, if a target event belongs to the call channel type, a channel mode that satisfies a condition may be selected from the standard channel mode or the private channel mode based on the preset priorities of the channel modes, the historical channel mode, the external ambient noise, or the like, so that the channel mode automatically selected by the electronic device better complies with a use requirement of the user. Regardless of a specific manner in which the electronic device selects the channel mode, because a finally selected channel mode satisfies a filtering criterion, listening experience of the user is improved if the electronic device uses the finally selected channel mode.

In a possible implementation, the playing the voice signal at the second volume in a standard channel mode in response to the third operation includes: playing the voice signal at the second volume in the standard channel mode in response to the third operation if it is determined that the second volume satisfies a standard channel mode switching condition.

For example, the standard channel mode switching condition may include any one of the following:
(1) The second volume is greater than the first volume. To be specific, a channel mode setting (setMode) module of the electronic device may determine that the standard channel mode switching condition is satisfied, provided that the channel mode setting (setMode) module detects a volume increase.
(2) A difference between the second volume and the first volume is greater than or equal to a preset difference. To be specific, the channel mode setting (setMode) module of the electronic device may determine that the volume satisfies the standard channel mode switching condition, when detecting that a volume increase amplitude is greater than or equal to the preset difference.
(3) A ratio of the second volume to the first volume is greater than or equal to a preset ratio. To be specific, the channel mode setting (setMode) module of the electronic device may determine that the volume satisfies the standard channel mode switching condition, when detecting that a volume increase amplitude is greater than or equal to the preset ratio.
(4) The second volume is greater than the preset volume. To be specific, the channel mode setting (setMode) module of the electronic device may determine that the volume satisfies the standard channel mode switching condition, when detecting that a changed volume is greater than the preset volume.

In a possible implementation, if a channel mode used before the third operation is received is the standard channel mode, after it is determined that the standard channel mode switching condition is satisfied, the method further includes: maintaining the standard channel mode; or if a channel mode used before the third operation is received is the private channel mode, after it is determined that the standard channel mode switching condition is satisfied, the method further includes: switching from the private channel mode to the standard channel mode.

It should be understood that, when the standard channel mode switching condition is satisfied, the standard channel mode may be maintained or the standard channel mode may be used after switching, so that sound can be played in the standard channel mode.

In a possible implementation, the playing the voice signal at the third volume in a private channel mode in response to the third operation includes: playing the voice signal at the third volume in the private channel mode in response to the third operation if it is determined that the third volume satisfies a private channel mode switching condition.

For example, the private channel mode switching condition may include any one of the following:
(1) The third volume is less than the first volume. To be specific, a channel mode setting (setMode) module of the electronic device may determine that the volume satisfies the private channel mode switching condition, provided that the channel mode setting (setMode) module detects a volume decrease.
(2) A difference between the first volume and the third volume is greater than or equal to a preset difference. To be specific, the channel mode setting (setMode) module of the electronic device may determine that the volume satisfies the private channel mode switching condition, when detecting that a volume decrease amplitude is greater than or equal to the preset difference.
(3) A ratio of the first volume to the third volume is greater than or equal to a preset ratio. To be specific, the channel mode setting (setMode) module of the electronic device may determine that the volume satisfies the private channel mode switching condition, when detecting that a volume decrease amplitude is greater than or equal to the preset ratio.
(4) The third volume is less than or equal to the preset volume. To be specific, the channel mode setting (setMode) module of the electronic device may determine that the volume satisfies the private channel mode switching condition, when detecting that a changed volume is less than or equal to the preset volume.

In a possible implementation, if a channel mode used before the third operation is received is the private channel mode, after it is determined that the private channel mode switching condition is satisfied, the method further includes: maintaining the private channel mode; or if a channel mode used before the third operation is received is the standard channel mode, after it is determined that the private channel mode switching condition is satisfied, the method further includes: switching from the standard channel mode to the private channel mode.

It should be understood that, when the private channel mode switching condition is satisfied, the private channel mode may be maintained or the private channel mode may be used after switching, so that sound can be played in the private channel mode.

In a possible implementation, if the voice signal is a voice message, the playing a voice signal of the call application at a first volume in response to the second operation includes: in response to the second operation, detecting whether the user exists within a preset range; and when the user exists within the preset range, selecting, from the standard channel mode or the private channel mode, a channel mode that satisfies a condition, and playing the voice message in the channel mode that satisfies the condition; or when the user does not exist within the preset range, playing the voice message at a sixth volume in the speaker mode, where the sixth volume is greater than the first volume, the second volume, and the third volume.

It should be understood that, when the electronic device plays the voice message, if the user is close to the electronic device, the user may need to protect private information, and in this case, the standard channel mode or the private channel mode with a lower playing volume is used. If the user is far away from the electronic device, the user may not need to protect private information, and in this case, the speaker mode with a higher playing volume is used.

In a possible implementation, when the voice signal is a voice message, if the channel mode that satisfies the condition is the private channel mode, the method further includes: after the voice message is played in the private channel mode, if a volume increase operation is not received and the user exists within the preset range, playing, still in the private channel mode, other voice messages received after the voice message; or after the voice message is played in the private channel mode, if a volume increase operation is received, the standard channel mode switching condition is satisfied, and the user exists within the preset range, playing, in the standard channel mode, other voice messages received after the voice message; or after the voice message is played in the private channel mode, if a volume increase operation is received, the standard channel mode switching condition is not satisfied, and the user exists within the preset range, playing, still in the private channel mode, other voice messages received after the voice message; or after the voice message is played in the private channel mode, if the user does not exist within the preset range, playing, at the sixth volume in the speaker mode, other voice messages received after the voice message. For the standard channel mode switching condition, refer to the descriptions of the foregoing embodiment. Details are not described herein again.

It should be understood that in a process in which the electronic device plays the voice message, the user may move away from or close to the electronic device at any time, and may also increase or decrease the volume at any time. Therefore, the electronic device can adjust the channel mode in real time based on whether the detected user is within the preset range and whether there is a volume adjustment operation.

In a possible implementation, when the third operation is the operation for increasing the first volume to the second volume, the third operation may be specifically an operation for increasing the volume by pressing a physical volume button or sliding a volume control. For example, the third operation may be a pressing operation on a "volume up" button disposed on a side frame, or a rightward or upward sliding operation on the volume control in settings.

It should be understood that the physical volume button is pressed or the volume control is slid to increase the volume, so that the standard channel mode may be entered to play sound at a high volume. This improves listening experience of the user.

In a possible implementation, when the third operation is the operation for decreasing the first volume to the third volume, the third operation may be specifically an operation for decreasing the volume by pressing a physical volume button or sliding a volume control. For example, the third operation may be a pressing operation on a "volume down" button disposed on a side frame, or a leftward or downward sliding operation on the volume control in settings.

It should be understood that the physical volume button is pressed or the volume control is slid to decrease the volume, so that the private channel mode may be entered. This reduces sound leakage of the electronic device, reduces leakage of voice communication content, and can also maintain the near-field loudness and ensure that listening effect of the user is substantially unchanged.

In a possible implementation, after the second operation or the third operation for volume adjustment is received, the method further includes: storing the second volume or the third volume. The second volume or the third volume is a historical volume at which an audio signal of the call application is played in response to a next event of the first event.

It should be understood that the adjusted volume is stored as the historical volume for making a voice call next time or playing a voice message next time. In this way, when the user uses the electronic device to perform voice communication such as a call or a voice chat with another device next time, the electronic device may use the stored volume as the historical volume for making the voice call next time or playing the voice message next time, and set, based on the historical volume value, a volume for playing audio next time.

According to a second aspect, this application provides an audio processing apparatus. The apparatus includes units/modules configured to perform the method according to the first aspect. The apparatus may correspondingly perform the method described in the first aspect. For related descriptions of the units/modules in the apparatus, refer to the descriptions in the first aspect. For brevity, details are not described herein again.

According to a third aspect, an electronic device is provided, including a processor. The processor is coupled to a memory. The processor is configured to execute a computer program or instructions stored in the memory, so that the electronic device implements the channel mode switching method according to any one of the first aspect or the possible implementations of the first aspect.

According to a fourth aspect, a chip is provided. The chip is coupled to a memory. The chip is configured to read and execute a computer program stored in the memory, to implement the channel mode switching method according to any one of the first aspect or the possible implementations of the first aspect.

According to a fifth aspect, a computer-readable storage medium is provided. The computer-readable storage medium stores a computer program. When the computer program is run on an electronic device, the electronic device is enabled to perform the channel mode switching method according to any one of the first aspect or the possible implementations of the first aspect.

According to a sixth aspect, a computer program product is provided. When the computer program product is run on a computer, the computer is enabled to perform the channel mode switching method according to any one of the first aspect or the possible implementations of the first aspect.

It can be understood that, for beneficial effects of the second aspect to the sixth aspect, refer to related descriptions in the first aspect. Details are not described herein again.

### BRIEF DESCRIPTION OF DRAWINGS

FIG. 1 is diagrams of scenarios of a standard channel mode and a private channel mode according to an embodiment of this application;
FIG. 2 is a diagram of a structure of a mobile phone having a screen sound emitting device according to an embodiment of this application;
FIG. 3 is diagrams of an earpiece and a speaker disposed on two side frames of a mobile phone according to an embodiment of this application;
FIG. 4 is a diagram of a waveform of a first audio signal played through an earpiece according to an embodiment of this application;
FIG. 5 is a diagram of a waveform obtained after a second audio signal is canceled by a first audio signal according to an embodiment of this application;
FIG. 6 is a diagram of a three-dimensional structure of a mobile phone having two sound emitting elements according to an embodiment of this application;
FIG. 7 is a diagram of a front cross-sectional structure of a mobile phone having two sound emitting elements according to an embodiment of this application;
FIG. 8 is a diagram of a near field and a far field according to an embodiment of this application;
FIG. 9 is a diagram 1 of an application scenario of controlling channel mode switching according to an embodiment of this application;
FIG. 10 is a diagram 2 of an application scenario of controlling channel mode switching according to an embodiment of this application;
FIG. 11 is a diagram 3 of an application scenario of controlling channel mode switching according to an embodiment of this application;
FIG. 12 is a diagram 4 of an application scenario of controlling channel mode switching according to an embodiment of this application;
FIG. 13 is a diagram 5 of an application scenario of controlling channel mode switching according to an embodiment of this application;
FIG. 14 is a diagram 6 of an application scenario of controlling channel mode switching according to an embodiment of this application;
FIG. 15 is a diagram 7 of an application scenario of controlling channel mode switching according to an embodiment of this application;
FIG. 16 is a diagram 8 of an application scenario of controlling channel mode switching according to an embodiment of this application;
FIG. 17 is a diagram 9 of an application scenario of controlling channel mode switching according to an embodiment of this application;
FIG. 18 is a diagram 10 of an application scenario of controlling channel mode switching according to an embodiment of this application;
FIG. 19 is a diagram 11 of an application scenario of controlling channel mode switching according to an embodiment of this application;
FIG. 20 is a diagram 12 of an application scenario of controlling channel mode switching according to an embodiment of this application;
FIG. 21 is a diagram 13 of an application scenario of controlling channel mode switching according to an embodiment of this application;
FIG. 22 is a diagram of an architecture of an electronic device according to an embodiment of this application;
FIG. 23 is a schematic flowchart of a channel mode switching method according to an embodiment of this application;
FIG. 24 is a schematic flowchart of another channel mode switching method according to an embodiment of this application; and
FIG. 25 is a diagram of a hardware structure of an electronic device according to an embodiment of this application.

### DESCRIPTION OF EMBODIMENTS

To make the objectives, technical solutions, and advantages of embodiments of this application clearer, the following clearly and completely describes technical solutions in embodiments of this application with reference to accompanying drawings in embodiments of this application. It is clear that the described embodiments are some but not all embodiments of this application.

In descriptions of this application, unless otherwise specified, "/" means "or". For example, A/B may represent A or B. In the descriptions of this application, "and/or" describes only an association relationship for describing associated objects and represents that three relationships may exist. For example, A and/or B may represent the following three cases: Only A exists, both A and B exist, and only B exists.

In the specification and claims of this application, terms such as "first" and "second" are intended to distinguish between different objects or distinguish between different processing for an object, but do not indicate a particular order of the objects. For example, a first operation, a second operation, and the like are intended to distinguish between different operations, but do not indicate a particular order of the operations. In embodiments of this application, "a plurality of" means at least two.

Reference to "an embodiment", "some embodiments", or the like described in this specification of this application means that one or more embodiments of this application include a specific feature, structure, or characteristic described with reference to the embodiment. Therefore, sentences "in an embodiment", "in some embodiments", "in some other embodiments", "in still some other embodiments", and the like in different parts of this specification unnecessarily reference a same embodiment, but mean "one or more embodiments but not all embodiments", unless otherwise specified particularly. Terms "include", "comprise", "have", and variants thereof all mean "including but not limited to", unless otherwise specified particularly.

In a process in which an electronic device performs voice communication such as a call or a voice chat with another device, the electronic device may convert an audio signal from the another device into an audio signal and play the audio signal through an earpiece. When a user listens to the audio signal, the audio signal is also easily heard by other people due to various reasons such as omnidirectional radiation of the audio signal and reflection of the audio signal from the user' head. As a result, related private information is leaked.

Particularly, when the user holds the electronic device in a crowded place, for example, an elevator, public transportation, a shopping mall, or a hospital, external noisy ambient noise may interfere with call quality. If the user communicates with a peer by increasing a volume, it is rather prone to leak private information of the user. If the user does not expect call content to be heard by other people, the user may decrease the volume of the electronic device or keep an ear close to the electronic device, to reduce a probability that the audio signal is heard by other people. However, by decreasing the volume of the electronic device, the user cannot clearly hear the audio signal played by the electronic device, resulting in poor hearing experience of the user. Effect of keeping the earpiece close to the ear is also undesirable. The audio signal emitted by the earpiece leads to physical phenomena such as reflection and diffraction after passing through the user's head, and consequently other people around the user can still relatively clearly hear the audio signal emitted by the mobile phone of the user. For a person who unintentionally eavesdrops, the audio signal is noise pollution, which is prone to cause auditory discomfort.

In view of the foregoing problems, an embodiment of this application provides a method for controlling channel mode switching through a volume. When a user uses an electronic device to make a real-time voice call with another device, or when the user uses the electronic device to exchange voice chat messages with another device, the electronic device can detect a volume change in real time. When a specified current volume is low, a private channel mode may be used. This reduces far-field loudness when the electronic device plays voice content, reduces leakage of the voice content, and can also maintain near-field loudness when the electronic device plays the voice content and ensure that listening effect of the user is substantially unchanged. When a specified current volume is high, the user may no longer need to protect private information, and may use a standard channel mode to play sound at a high volume in both a near field and a far field. This improves listening experience of the user. In this method, a playing volume can be adjusted depending on an actual requirement, and channel mode switching can be performed in real time. In this way, hearing experience of the user can be ensured, and privacy and security of the user can be protected.

The method for controlling channel mode switching through a volume provided in this embodiment of this application is applicable to various electronic devices, for example, a terminal (terminal), user equipment (user equipment, UE), a mobile station (mobile station, MS), and a mobile terminal (mobile terminal, MT). The terminal device may be a mobile phone (mobile phone), a smart TV, a wearable device, a tablet computer (pad), a computer having wireless sending and receiving functions, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like, or may be another device or apparatus that can perform voice communication. A specific type of the electronic device is not limited in embodiments of this application.

In this embodiment of this application, the electronic device is provided with three channel modes (modes):

A first mode is a conventional standard channel mode. When private information does not need to be protected, the electronic device may use the standard channel mode, and an earpiece of the electronic device plays an audio signal based on a historical volume value or a volume value specified by the user, without performing sound leakage processing on the audio signal.

A second mode is a private channel mode. When private information needs to be protected, the private channel mode may be implemented through improvement on software or hardware of the electronic device, to play a processed audio signal. Using the private channel mode reduces far-field loudness of the audio signal, that is, reduces sound leakage. In addition, using the private channel mode maintains near-field loudness of the audio signal, so that listening effect of the user is substantially unchanged.

A third mode is a conventional speaker mode. When private information does not need to be protected, the electronic device may alternatively use the speaker mode, and a speaker of the electronic device plays an audio signal based on a historical volume value or a volume value specified by the user. In comparison with the standard channel mode, driving power of the speaker is greater than driving power of the earpiece, and therefore a playing volume when the speaker mode is used is greater than a playing volume when the standard channel mode is used.

It should be noted that playing volumes in the standard channel mode and the private channel mode are lower than that in the speaker mode. To distinguish between the standard channel mode and the private channel mode more clearly, the following uses an example in which the electronic device is a mobile phone, to describe a specific difference between the standard channel mode and the private channel mode when the mobile phone outputs audio signals with a same volume value.

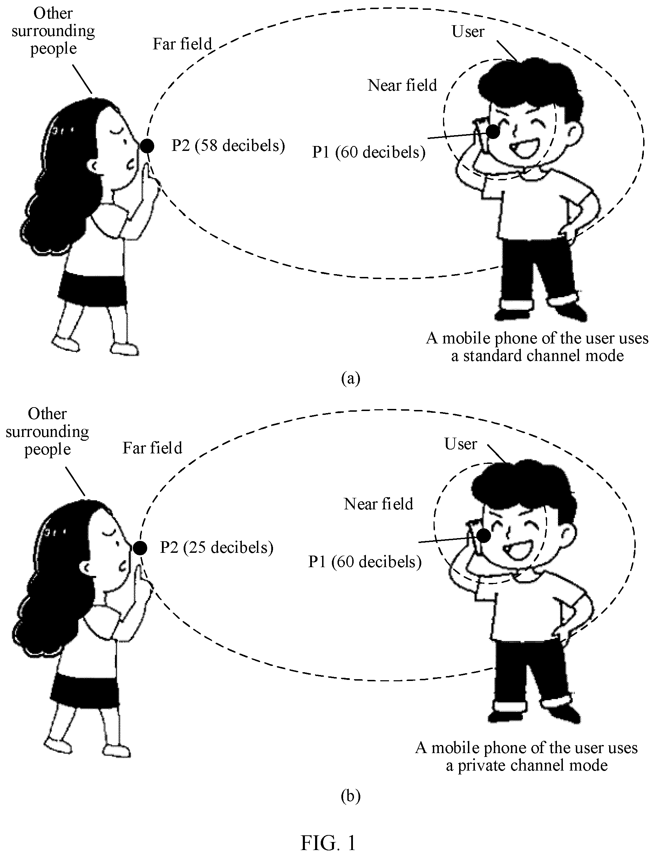

As shown in (a) in FIG. 1, when a user uses a mobile phone to perform voice communication with another user, it is assumed that a volume value of the mobile phone is 3 bars (different quantities of bars represent different volume values), and a standard channel mode is used. In a near-field range with a sound emitting component of the mobile phone as a center, for example, a location of an ear of the user is represented by P1, because the location P1 is quite close to the sound emitting component of the mobile phone, loudness of an audio signal heard by the user is equal to or slightly less than 60 dB. In addition, other surrounding people are located near the user (for example, a distance between the other surrounding people and the user is 1 meter). After the audio signal emitted by the sound emitting component of the mobile phone is propagated through an air medium to a far-field range with the sound emitting component of the mobile phone as a center, the audio signal is attenuated to some extent. For example, the loudness of the audio signal is attenuated to 58 dB at a location of an ear of the other surrounding people, but is still high. As a result, the other surrounding people can also hear sound played by the mobile phone of the user.

As shown in (b) in FIG. 1, when a user uses a mobile phone to perform voice communication with another user, it is assumed that a volume value of the mobile phone is 3 bars, and a private channel mode is used. The mobile phone first performs privacy processing on an audio signal by using a preset algorithm corresponding to the private channel mode, and then plays an audio signal obtained through privacy processing. In a near-field range with a sound emitting component of the mobile phone as a center, for example, a location of an ear of the user is represented by P1, because the location P1 is quite close to the sound emitting component of the mobile phone, near-field loudness of the audio signal is maintained at the location P1, so that loudness of the audio signal heard by the user is equal to or slightly less than 60 dB. In addition, other surrounding people are located near the user (for example, a distance between the other surrounding people and the user is 1 meter). After the audio signal obtained through privacy processing is propagated through an air medium to a far-field range with the sound emitting component of the mobile phone as a center, the audio signal is greatly attenuated. For example, the loudness of the audio signal is attenuated to 25 dB at a location of an ear of the other surrounding people. Because the loudness of the audio signal is greatly reduced, the other surrounding people may be unable to clearly hear sound played by the mobile phone of the user. In this way, private information of the user is protected.

According to the foregoing analysis, this embodiment of this application mainly implements security protection of the private information of the user based on the private channel mode. The private channel mode may be implemented through improvement on software of the electronic device, may be implemented through improvement on hardware of the electronic device, or may be implemented improvement on both software and hardware of the electronic device. This is not specifically limited in embodiments of this application.

The following provides three specific implementations of the private channel mode by using an example in which the electronic device is a mobile phone.

### Implementation 1

In this implementation, the mobile phone may be provided with a screen sound emitting device in addition to a conventional speaker device. The screen sound emitting device may be disposed on a back surface of a screen and located on an upper half of the screen. The screen sound emitting device may drive, during operation, the screen to vibrate, so that the screen emits sound. The speaker device is disposed at a location that is in the mobile phone and that is close to a sound outlet. Sound emitted during operation of the speaker device may be output to an external environment through the sound outlet.

In some embodiments, the screen sound emitting device may be any device that can produce controllable vibration, for example, a piezoelectric ceramic exciter or a voice coil exciter. This is not limited in embodiments of this application.

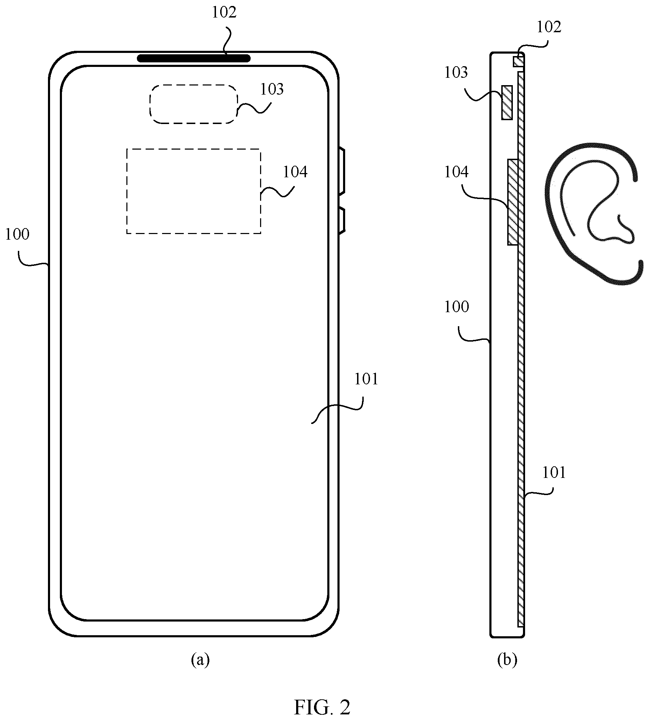

For example, FIG. 2 is a diagram of a structure of a mobile phone 100 having a screen sound emitting device 104 according to an embodiment of this application. (a) in FIG. 2 shows a front view of the mobile phone 100, and (b) in FIG. 2 shows a side cross-sectional view of the mobile phone 100. As shown in (a) in FIG. 2 and (b) in FIG. 2, the mobile phone 100 may include a screen 101, a sound outlet 102, a speaker device 103, and a screen sound emitting device 104.

The sound outlet 102 is disposed on a top frame of the mobile phone 100, and is even disposed on a top side frame of the mobile phone 100. There are two modes in which the mobile phone 100 outputs sound through the sound outlet 102: One is an earpiece mode with a lower volume, and the other one is a speaker mode with a higher volume. A same sound emitting unit (for example, the speaker device 103) may be used inside the mobile phone 100 to emit sound in the earpiece mode and the speaker mode separately. In the earpiece mode, low-volume sound is emitted by decreasing power of the speaker device 103. In the speaker mode, high-volume sound is emitted by increasing the power of the speaker device 103. When a user uses the mobile phone 100 to perform voice communication with another user, if the user selects the earpiece mode, the user usually needs to direct an ear to an upper half region of the screen 101. Sound emitted by the speaker device 103 is propagated through an air medium after passing through the sound outlet 102, and a part of the sound may be leaked to an external region far away from the mobile phone 100. Therefore, for a scenario in which the user does not need to protect private information, the mobile phone 100 may use a standard channel mode (namely, the earpiece mode). In this case, the speaker device 103 may play sound. The sound can be heard by the user after being propagated to an external environment through the sound outlet 102.

The screen sound emitting device 104 may be disposed in the upper half region of the screen 101, for example, disposed at a location that is at a distance, which is 1/3 of a length of the screen 101, from the top frame of the mobile phone 100. When the user keeps the mobile phone 100 close to the face or the head to listen to the sound, the screen sound emitting device 104 is located close to the ear of the user. The sound emitted by the screen 101 through vibration under the driving of the screen sound emitting device 104 is transferred to auditory ossicles of the user, and is then received by auditory nerves, so that the user can hear the sound. It should be understood that, compared with an audio signal that is emitted by the sound outlet 102 and that is dependent on propagation through the air, an audio signal emitted by the screen 101 through vibration under the driving of vibration of the screen sound emitting device 104 is less dependent on propagation through the air. Therefore, sound leakage does not occur, or sound leakage can be greatly reduced. Therefore, for a scenario in which the user needs to protect private information, the mobile phone 100 may use a private channel mode. In this case, the screen sound emitting device 104 may vibrate, to drive the screen 101 to emit an audio signal through vibration. This effectively prevents sound from leaking to an external environment.

It should be noted that the screen sound emitting device 104 may be disposed at a middle location of the upper half region of the screen 101 or may not be disposed in the middle. When the mobile phone 100 uses the private channel mode, regardless of a specific manner of disposing the screen sound emitting device 104, a location at which the screen 101 emits sound through vibration is close to the ear of the user. Therefore, most of the sound is received by the user, so that near-field loudness of the audio signal can be maintained. In addition, sound that is not received is mostly obstructed by the user's head, so that sound leakage is reduced, and far-field loudness of the audio signal is reduced.

### Implementation 2

In this implementation, the mobile phone may be provided with an earpiece and a speaker. The earpiece may be disposed on a top location of a screen or a top side frame (also referred to as an upper frame) of the mobile phone, and the speaker may be disposed on a bottom side frame (also referred to as a lower frame) of the mobile phone.

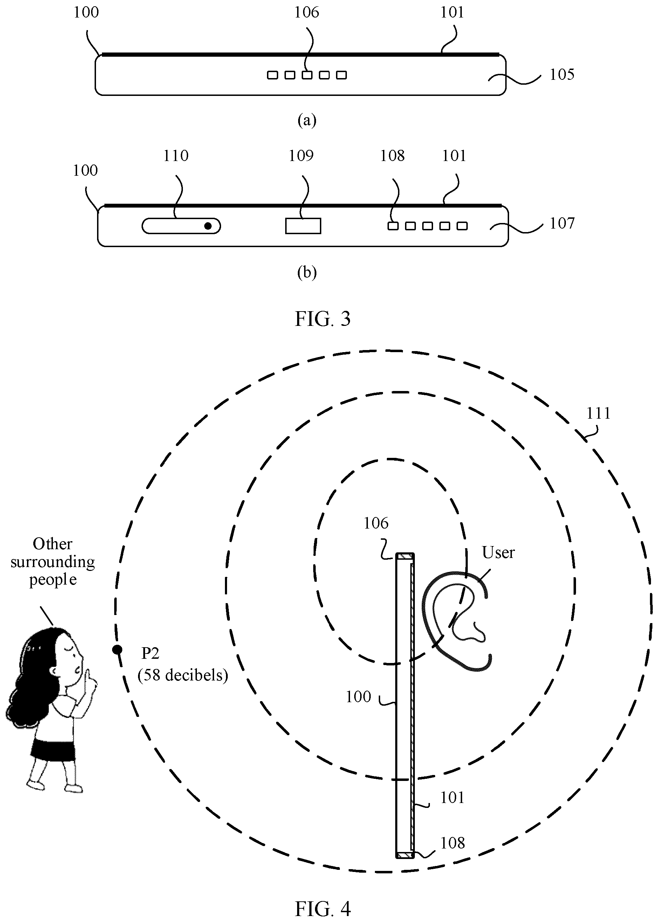

For example, FIG. 3 is a diagram of an earpiece 106 and a speaker 108 disposed on two side frames of a mobile phone 100. As shown in (a) in FIG. 3, the earpiece 106 is disposed on an upper frame 105 adjacent to a screen 101 of the mobile phone 100, and the earpiece 106 includes a plurality of sound outlets. As shown in (b) in FIG. 3, the speaker 108, a USB interface 109, and a SIM card interface 110 are disposed on a lower frame 107 adjacent to the screen 101, and the speaker 108 may also include a plurality of sound outlets. The upper frame 105 and the lower frame 107 are two side frames that are disposed opposite to each other in the mobile phone 100. It should be noted that during actual implementation, locations and quantities of the earpiece and the speaker can be adjusted depending on an actual design requirement of a product. For example, the earpiece and the speaker may be disposed on a left frame and a right frame of the mobile phone 100, respectively. For another example, the earpiece and the speaker may be disposed at a central location of a frame, or the earpiece and the speaker may be disposed at an edge location of a frame. It should be understood that different layout directions of the earpiece and the speaker lead to different sound fields generated by the earpiece and the speaker.

The following provide a sound leakage cancelation method by using the mobile phone 100 shown in FIG. 3 as an example.

Generally, a waveform of an audio signal (namely, a sound wave) without obstruction of an obstacle is a spherical wave. When there is obstruction of an obstacle, a waveform of an audio signal approximates to a spherical wave. For example, FIG. 4 is a diagram of a waveform of a first audio signal played through the earpiece 106 in a process in which the mobile phone 100 performs voice communication. As shown in FIG. 4, the waveform 111 of the first audio signal approximates to a spherical wave. When other surrounding people are close to a user (that is, a distance between the other surrounding people and the user is less than a preset distance), the first audio signal may enter an ear of the user to be heard by the user, and may also be propagated in other directions, for example, propagated through an air medium to an ear of the other surrounding people to be heard by the other surrounding people. For example, the preset distance may be any value: 0.5 meter, 0.55 meter, 0.6 meter, or the like. Consequently, private information of the user may be leaked, affecting privacy and security of the user.

Based on this, in the voice communication process, the mobile phone 100 may control, based on an acoustic dipole radiation phenomenon, the speaker 108 to emit a second audio signal (that is, an opposite-phase sound wave) having a phase opposite to that of the first audio signal, to cancel sound leakage of the first audio signal in a preset region around the mobile phone 100, so that leakage of voice communication content is reduced. In this way, privacy and security of the user can be protected.

Both the second audio signal and the first audio signal are analog audio signals, and phases of the second audio signal and the first audio signal are opposite. Specifically, a phase difference between the second audio signal and the first audio signal is approximately 180°. For example, the phase difference between the second audio signal and the first audio signal may be [180°-p, 180°+p]. p is less than a preset angle threshold. For example, p may be 0°, or may be any value that approximates to 0°: 1°, 2°, 3°, or the like. The preset angle threshold may be any value that approximates to 0°: 1°, 2°, 3°, or the like.

It can be understood that for a sound wave, a phase (phase) is a location of the sound wave in a waveform of the sound wave at a specific moment, for example, a crest, a trough, or a point between a crest and a trough. The phase may be used as a scale of the sound wave at the crest, the trough, or the point between the crest and the trough at the specific moment. For example, at a specific moment, when the first audio signal is at a crest, the second audio signal is at a trough; or when the first audio signal is at a trough, the second audio signal is at a crest. In addition, for two sound waves with different sound sources, if parameters such as amplitudes and frequencies are the same at a same moment, but phases of the two sound waves are opposite, the two sound waves can cancel out each other in a specific region and at a specific angle during propagation.

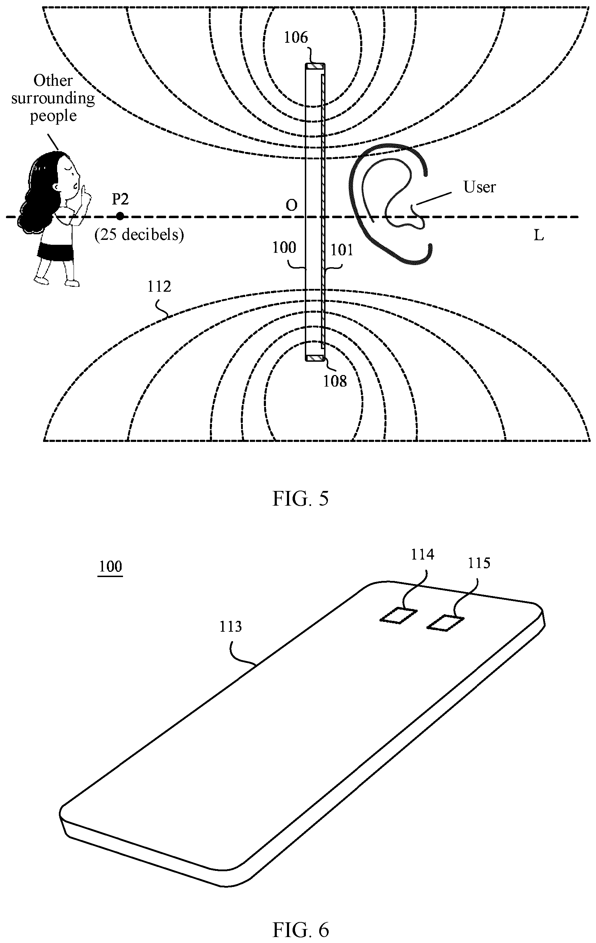

As shown in FIG. 4, the waveform 111 of the first audio signal approximates to a spherical wave. However, during propagation of the first audio signal, at some locations (also referred to as the preset region), the first audio signal encounters the second audio signal having the phase opposite to that of the first audio signal. In this case, because the phases of the second audio signal and the first audio signal are opposite, the second audio signal and the first audio signal can cancel out each other in the preset region. As a result, the waveform of the first audio signal may change due to cancelation effect of the second audio signal. For example, the waveform of the first audio signal changes from the waveform 111 shown in FIG. 4 to a waveform 112 shown in FIG. 5. The waveform 112 shown in FIG. 5 is a waveform obtained after the second audio signal is canceled by the first audio signal.

As shown in FIG. 5, during propagation of the first audio signal and the second audio signal, the first audio signal and the second audio signal can cancel out each other in a region in which a dashed line L shown in FIG. 5 is located, so that sound leakage of the first audio signal in the region can be reduced. In this case, as shown in FIG. 5, other surrounding people are in the region in which sound leakage is canceled. Therefore, the other surrounding people cannot hear the first audio signal played through the earpiece 106. This can protect privacy of the user from being leaked.

When the mobile phone 100 plays the first audio signal through the earpiece 106, the mobile phone 100 is held in a portrait mode. For example, relative locations of the earpiece 106 and the speaker 108 of the mobile phone 100 are shown in FIG. 5. As shown in FIG. 5, a point O is a midpoint of a connection line between the locations of the earpiece 106 and the speaker 108. A straight line L is perpendicular to the connection line between the locations of the earpiece 106 and the speaker 108, and the straight line L passes through the point O. The preset region may include a region on or near the straight line L shown in FIG. 5. The sound leakage cancelation method provided in this embodiment of this application can cancel sound leakage in the region that is on or near the straight line L shown in FIG. 5 and that is approximately at the preset distance from the point O. In other words, the preset region may include the region that is on or near the straight line L shown in FIG. 5 and that is approximately at the preset distance from the point O.

It should be noted that a frequency range of a human voice is approximately 100 hertz to 10 kilohertz. During a voice call between the user and another user, a frequency and strength of an audio signal (the first audio signal) of the another user may change in real time. In addition, cancelation effect of the two audio signals with opposite phases may be different at different frequencies.

In this implementation, for a scenario in which the user does not need to protect private information, the mobile phone 100 may use a standard channel mode (namely, an earpiece mode). In this case, the earpiece 106 may play the first audio signal. The first audio signal can be heard by the user of the mobile phone 100 and other people around the mobile phone 100.

For a scenario in which the user needs to protect private information, the mobile phone 100 may use a private channel mode. The earpiece 106 may play the first audio signal while the speaker 108 plays the second audio signal. Because the phases of the first audio signal and the second audio signal are opposite, the first audio signal and the second audio signal cancel out each other in the preset region around the mobile phone 100, so that leakage of voice communication content is reduced. In this way, privacy and security of the user can be protected.

### Implementation 3

Similar to the foregoing implementation 2, the implementation 3 provides another solution for reducing leakage of voice communication content by canceling out two audio signals with different phases based on an acoustic dipole radiation phenomenon.

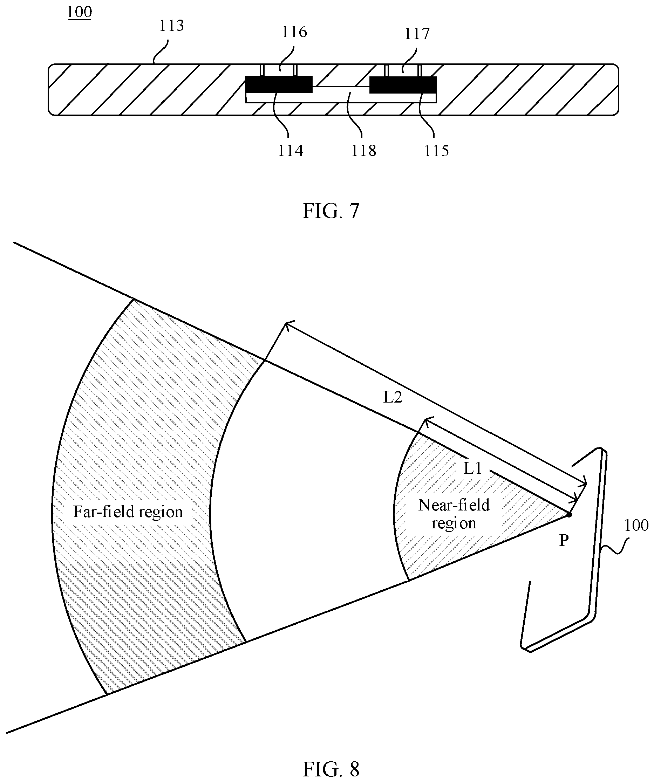

For example, FIG. 6 and FIG. 7 are diagrams of structures of a mobile phone 100 having two sound emitting elements according to embodiments of this application. FIG. 6 shows a three-dimensional view of the mobile phone 100, and FIG. 7 shows a front cross-sectional view of the mobile phone 100.

As shown in FIG. 6 and FIG. 7, the mobile phone 100 may include a housing 113 and a first sound emitting element 114. The first sound emitting element 114 is disposed in the housing 113, and a first audio signal generated by the first sound emitting element 114 may be emitted outward through a first sound outlet 116 to be listened to by a user. The mobile phone 100 further includes a second sound emitting element 115 used in cooperation with the first sound emitting element 114. The second sound emitting element 115 is also disposed in the housing 113, and can emit a second audio signal, where the second audio signal may be emitted outward through a sound outlet 117, to implement a substantially same function as the first sound emitting element 114. It should be understood that the first audio signal and the second audio signal that are emitted by the mobile phone 100 have a same sound source. The first audio signal and the second audio signal carry same information. For example, both the first audio signal and the second audio signal may be sound from a peer of a call, or both the first audio signal and the second audio signal may be sound emitted by tapping on information in a voice form/song.

In some embodiments, the housing 113 may include a middle frame, a rear cover, and a baffle. Space formed by enclosing the rear cover with the middle frame may fit in with the baffle to form a relatively independent cavity, to accommodate the first sound emitting element 114 and the second sound emitting element 115. It should be understood that the baffle and the rear cover may be integrally formed by using a mold, or may be fastened to each other through welding.

Both the first sound emitting element 114 and the second sound emitting element 115 are disposed in the housing 113, and a rear cavity 118 is enclosed jointly by the first sound emitting element 114, the second sound emitting element 115, and the housing 113. In other words, the first sound emitting element 114 and the second sound emitting element 115 share the rear cavity 118. The first sound emitting element 114 is located on an inner side of the first sound outlet 116, and emits the first audio signal through the first sound outlet 116. The second sound emitting element 115 is located on an inner side of the second sound outlet 117, and emits the second audio signal through the second sound outlet 117.

For example, both the first sound emitting element 114 and the second sound emitting element 115 may be earpieces or speakers. A distance between the first sound outlet 116 and the second sound outlet 117 ranges from 3 mm to 30 mm. Areas of both the first sound outlet 116 and the second sound outlet 117 range from 2 mm² to 20 mm².

It should be understood that the first sound outlet 116 and the second sound outlet 117 each have an inner side and an outer side that are opposite to each other. The inner side is a side that points to the inside of the housing 113 or that points to a sound emitting element, and the outer side is a side that points to free space. Based on this, the first audio signal may be input from the inner side of the first sound outlet 116, and then output from the outer side of the first sound outlet 116 to be radiated toward the free space. Similarly, the second audio signal may be input from the inner side of the second sound outlet 117, and then output from the outer side of the second sound outlet 117 to be radiated toward the free space.

To reduce a possibility that the audio signal emitted by the mobile phone 100 is heard by other people, the mobile phone 100 provided in this application equivalently uses the first sound emitting element 114 and the second sound emitting element 115 as acoustic dipoles. In addition, there is a specific phase difference between the first audio signal emitted by the first sound emitting element 114 and the second audio signal emitted by the second sound emitting element 115. For example, the phase difference between the first audio signal and the second audio signal ranges from 160° to 200°. It should be understood that, in a far field defined based on the phase difference by using physical quantities such as a Rayleigh length (Rayleigh length), the first audio signal and the second audio signal can cancel out each other to some extent, to reduce a possibility that other people in the far field hear the audio signal emitted by the mobile phone 100 of the user. This reduces a possibility that private information related to the user is leaked.

In addition, because the phase difference causes near-field loudness to be reduced to some extent, the first sound emitting element 114 and the second sound emitting element 115 share the rear cavity 118 to improve display effect of the two audio signals in a near field as a whole. When the first sound emitting element 114 and the second sound emitting element 115 synchronously emit the first audio signal and the second audio signal with different phases correspondingly, for example, when the first sound emitting element 114 compresses air in the rear cavity 118 to emit the first audio signal and the second sound emitting element 115 stretches air in the rear cavity 118 to emit the second audio signal, because air compression and air stretching are synchronized, an amount of air in the rear cavity 118 remains substantially unchanged. This can equalize a capacity of the rear cavity 118 to infinity. Correspondingly, both the first sound emitting element 114 and the second sound emitting element 115 can smoothly emit the corresponding audio signals by compressing and stretching air, to improve low-frequency radiation efficiency of the first audio signal and the second audio signal in the near field as a whole, and improve low-frequency loudness in the near field, for better listening by the user. In this case, an external environment of the user in this application is noisy.

In this implementation, for a scenario in which the user does not need to protect private information, the mobile phone 100 may use a standard channel mode (namely, an earpiece mode). In this case, the first sound emitting element 114 or the second sound emitting element 115 may play the first audio signal, or the first sound emitting element 114 and the second sound emitting element 115 may simultaneously play audio signals with a same phase. The audio signals can be heard by the user of the mobile phone 100 and other people around the mobile phone 100 in this case.

For a scenario in which the user needs to protect private information, the mobile phone 100 may use a private channel mode. The first sound emitting element 114 may play the first audio signal while the second sound emitting element 115 plays the second audio signal. The phases of the first audio signal and the second audio signal are different, for example, the phase difference between the first audio signal and the second audio signal ranges from 160° to 200°. Therefore, the first audio signal and the second audio signal cancel out each other in a preset region around the mobile phone 100, so that leakage of voice communication content is reduced. In this way, privacy and security of the user can be protected. In addition, because the first sound emitting element 114 and the second sound emitting element 115 share the rear cavity 118, both the first sound emitting element 114 and the second sound emitting element 115 can emit the corresponding audio signals by compressing and stretching air, to improve the low-frequency radiation efficiency of the first audio signal and the second audio signal in the near field as a whole, and improve the low-frequency loudness in the near field, for better listening by the user.

The foregoing embodiments describe the three specific implementations of the private channel mode. It should be understood that, when private information needs to be protected, the private channel mode may be alternatively implemented in other hardware and/or software manners. Regardless of a specific manner in which the electronic device implements the private channel mode, the private channel mode can achieve the following effects: Far-field loudness of an audio signal is reduced, and near-field loudness of the audio signal is maintained.

In embodiments of this application, the near field is also referred to as a near-field region or a near-field range, and the far field is also referred to as a far-field region or a far-field range. The near field and the far field are two relative ranges with a sound emitting component of the electronic device as a center. The near field is closer to the sound emitting component of the electronic device, and the far field is farther away from the sound emitting component of the electronic device.

For example, FIG. 8 is a diagram of a near field and a far field. As shown in FIG. 8, a location of the sound emitting component of the electronic device is represented by P, a distance from any point in the near field to the point P is less than or equal to L1, and a distance from any point in the far field to the point P is greater than or equal to L2, where L2 is greater than or equal to L1. For example, L1=0.1 meter, and L2=0.5 meter. L1 and L2 affect region sizes and region shapes of the near field and the far field. It can be learned from the descriptions of the private channel mode in the foregoing embodiments that, when the electronic device implements the private channel mode in different manners, the region sizes and the region shapes of both the near field and the far field may change. This is not specifically limited in embodiments of this application. The region sizes and the region shapes can be adjusted depending on an actual use requirement.

It is assumed that the user sets a volume of the electronic device to a target volume level. If the electronic device uses the standard channel mode at the target volume level, loudness at a point X in the near field is equal to loudness 1 (for example, 60 dB), and loudness at a point Y in the far field is equal to loudness 2 (for example, 58 dB). If the electronic device uses the private channel mode at the target volume level, a volume at a point X in the near field is equal to loudness 3 (for example, 60 dB or 59 dB), and loudness at a point Y in the far field is equal to loudness 4 (for example, 25 dB). It should be understood that, whether in the near field or the far field, a larger distance between the user and the point P leads to lower sound that the user hears. Therefore, the loudness 2 is less than the loudness 1, and the loudness 4 is less than the loudness 3.

The loudness 1 is equal to or approximately equal to the loudness 3, and the loudness 4 is much less than the loudness 2.

Specifically, the loudness 1 and the loudness 3, and the loudness 2 and the loudness 4 may satisfy the following relationships:
1. A difference between the loudness 1 and the loudness 3 is less than or equal to a difference 1, a difference between the loudness 2 and the loudness 4 is greater than or equal to a difference 2, and the difference 2 is greater than the difference 1. For example, the difference 1 may be 0 or approximately 0, that is, the loudness 3 is equal to or slightly less than the loudness 1. In this way, when the electronic device switches from the standard channel mode to the private channel mode, the near-field loudness of the audio signal can be maintained, so that listening effect of the user is substantially unchanged. The difference 2 may be a large value, for example, 10 dB, that is, the loudness 4 is much less than the loudness 2. In this way, when the electronic device switches from the standard channel mode to the private channel mode, the far-field loudness of the audio signal can be significantly reduced.
2. A ratio of the loudness 1 to the loudness 3 is equal to or approximately equal to a ratio 1, a ratio of the loudness 2 to the loudness 4 is greater than or equal to a ratio 2, and the ratio 2 is greater than the ratio 1. For example, the difference 1 may be equal to or approximates to 1, and the ratio 2 may be 1.5, 2, or the like. In this way, when the electronic device switches from the standard channel mode to the private channel mode, the near-field loudness of the audio signal can be maintained, so that listening effect of the user is substantially unchanged, and the far-field loudness of the audio signal is significantly reduced.

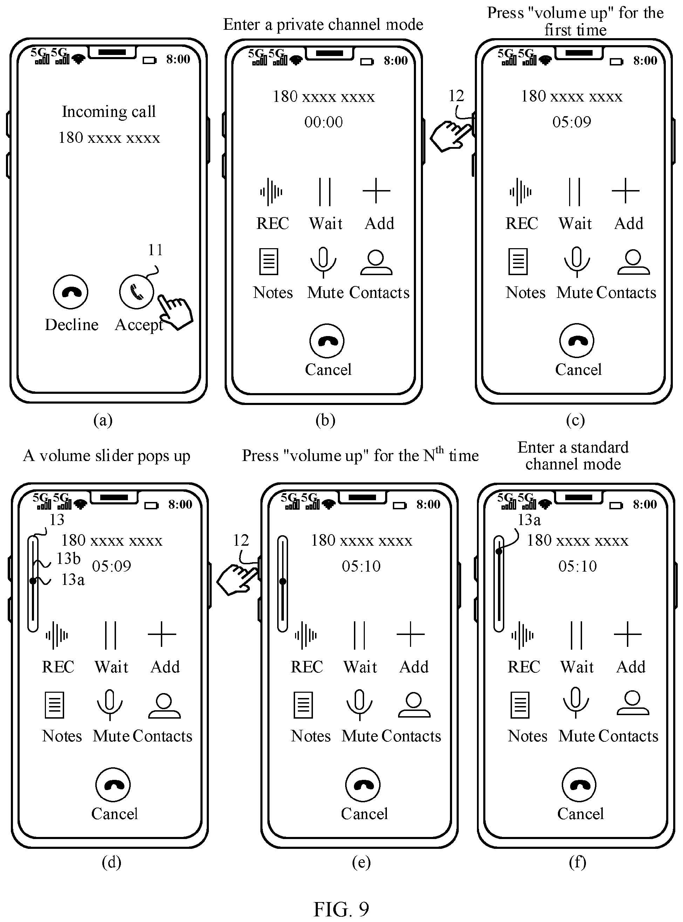

With reference to FIG. 9 to FIG. 20 and by using an example in which the electronic device is a mobile phone, the following describes application scenarios that are of the method for controlling channel mode switching through a volume and that are provided in embodiments of this application.

A first example application scenario is regular call scenarios.

The regular call scenarios are scenarios of calls by using a call (phone) application provided by a mobile phone system, and include an incoming call scenario (answering a call) and an outgoing call scenario (making a call). The following uses the incoming call scenario as an example for description.

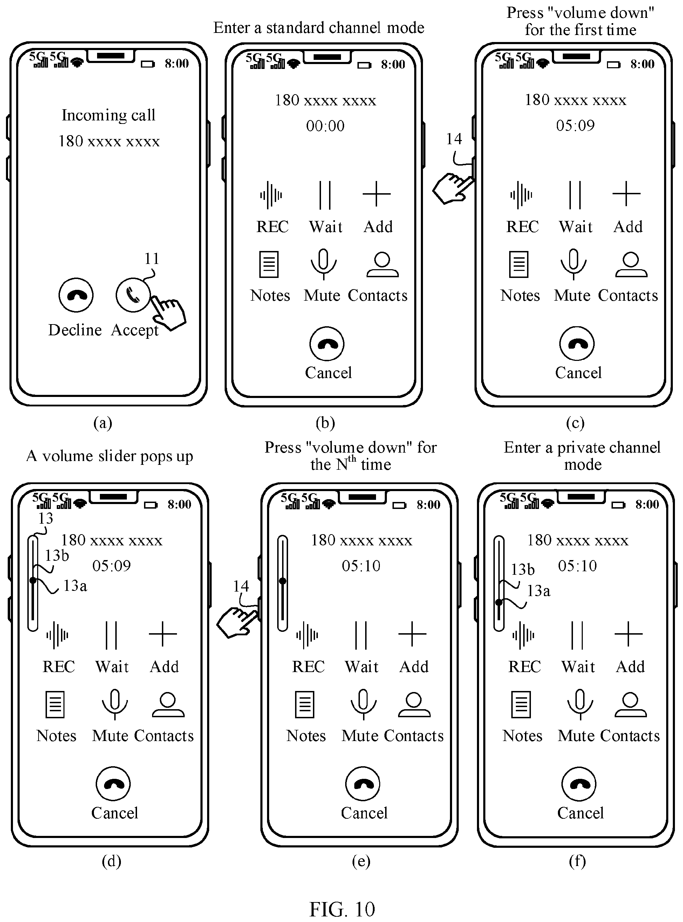

As shown in (a) in FIG. 9 or (a) in FIG. 10, after a mobile phone 1 receives a call service request from a mobile phone 2, the mobile phone 1 displays an incoming call interface. The incoming call interface includes a "decline" control and an "accept" control 11. If a user taps the "accept" control 11, the mobile phone 1 configures parameters such as a channel mode and a volume for the mobile phone 1 based on a channel type of the call service request in response to the tap operation of the user.

Embodiments of this application provide three channel types (types): a call channel type, a media channel type, and a Bluetooth channel type. If the channel type is the call channel type, a standard channel mode or a private channel mode is entered, and audio is played in the standard channel mode or the private channel mode. Sound is played in the standard channel mode through an earpiece, and sound is played in the private channel mode through a screen sound emitting device, two sound emitting components, or the like. If the channel type is the media channel type, a speaker mode is entered, and audio is played in the speaker mode. Sound is played in the speaker mode through a speaker. If the channel type is the Bluetooth channel type, a Bluetooth channel mode is entered, and audio is played through a Bluetooth device, for example, a Bluetooth headset, a Bluetooth speaker, or a Bluetooth watch.

The channel type of the call service request is the call channel type, and the call channel type is corresponding to the standard channel mode and the private channel mode. Therefore, the mobile phone 1 may select, from the standard channel mode and the private channel mode, a channel mode that satisfies a condition. In an example, the mobile phone 1 may preset the private channel mode to be at a high priority and preset the standard channel mode to be at a low priority. When it is determined that the channel type is a call channel, the mobile phone 1 directly configures the current channel mode to the private channel mode. In another example, the mobile phone 1 may prestore a channel mode used for a regular call last time. If the channel mode used for the regular call last time is the standard channel mode, the mobile phone 1 configures the current channel mode to the standard channel mode; or if the channel mode used for the regular call last time is the private channel mode, the mobile phone 1 configures the current channel mode to the private channel mode. In still another example, the mobile phone 1 may obtain a current environment parameter. If the current environment parameter indicates that an external environment is noisy, the mobile phone 1 configures the channel mode to the private channel mode; or if the current environment parameter indicates that an external environment is quiet, the mobile phone 1 configures the channel mode to the standard channel mode.

After the mobile phone 1 configures the parameters such as the channel mode and the volume based on the channel type in response to the user operation, the mobile phone 1 may establish a voice call link with the mobile phone 2, and display an ongoing call interface shown in (b) in FIG. 9 or (b) in FIG. 10. The mobile phone 1 may collect a sound signal of the user by using a microphone, convert the sound signal into an audio signal by using an audio data signal processor (ADSP), and then send the audio signal to the mobile phone 2, so that the mobile phone 2 can play the audio signal. In addition, the mobile phone 1 may convert an audio signal from the mobile phone 2 into a sound signal, and play the sound signal through a sound emitting component of the mobile phone 1 based on the configured parameters such as the channel mode and the volume. For example, as shown in (b) in FIG. 9, the mobile phone 1 may enter the private channel mode, and play the sound signal in the private channel mode based on a historical volume value. Because the private channel mode reduces far-field loudness of an audio signal and maintains near-field loudness of the audio signal, hearing experience of the user using the mobile phone 1 can be ensured, privacy and security of the user can be protected, and leakage of private information of the user can be avoided. For a specific implementation of the private channel mode, refer to the descriptions of the foregoing embodiment. Details are not described herein again.

In a call process, the user can adjust the volume of the mobile phone 1 depending on an actual requirement. Correspondingly, in response to an adjustment operation of the user, the mobile phone 1 may adjust the volume to a volume corresponding to the adjustment operation, and switch the channel mode to a channel mode corresponding to the adjusted volume.

In an example regular call scenario, by performing an operation on the "accept" control 11 in (a) in FIG. 9, the user may trigger the mobile phone 1 to display the ongoing call interface in (b) in FIG. 9, and trigger the mobile phone 1 to enter the private channel mode. If the external environment is noisy, but the user considers that private information does not need to be protected, the user may increase the volume of the mobile phone 1. As shown in (c) in FIG. 9, the user may perform a pressing operation for the first time on a "volume up" button 12 disposed on a side frame of the mobile phone 1. In response to the pressing operation performed for the first time, the mobile phone 1 displays a volume control 13 shown in (d) in FIG. 9. The volume control 13 includes a circular button 13a and a volume slider 13b. The circular button 13a may slide along the volume slider 13b. A specific location of the circular button 13a on the volume slider 13b may be used to indicate a current volume value of the mobile phone 1. Then, as shown in (e) in FIG. 9, the user may continue to perform a pressing operation for the Nth time on the "volume up" button 12, where N is an integer greater than or equal to 2. As shown in (f) in FIG. 9, each time the user presses the "volume up" button 12, the volume of the mobile phone 1 is increased by one volume level, and the circular button 13a of the volume control 13 slides upward for a preset distance, so that the user can know an increase amplitude of a current volume. If the mobile phone 1 has entered the standard channel mode before the user performs a pressing operation on the "volume up" button 12, the mobile phone 1 continues to maintain the standard channel mode, and increases, based on a quantity of presses on the "volume up" button 12, the volume for playing audio. Alternatively, if the mobile phone 1 is in the private channel mode and has not entered the standard channel mode before the user performs a pressing operation on the "volume up" button 12, after detecting that a standard channel mode switching condition is satisfied, the mobile phone 1 switches from the private channel mode to the standard channel mode, and increases, based on a quantity of presses on the "volume up" button 12, the volume for playing audio.

Assuming that the volume before the change is a first volume, and the changed volume is a second volume, the standard channel mode switching condition may be any one of the following: (1) The second volume is greater than the first volume. To be specific, it may be determined that the standard channel mode switching condition is satisfied, provided that a volume increase is detected. (2) A difference between the second volume and the first volume is greater than or equal to a preset difference. To be specific, it may be determined that the volume satisfies the standard channel mode switching condition, when it is detected that a volume increase amplitude is greater than or equal to the preset difference. (3) A ratio of the second volume to the first volume is greater than or equal to a preset ratio. To be specific, it may be determined that the volume satisfies the standard channel mode switching condition, when it is detected that a volume increase amplitude is greater than or equal to the preset ratio. (4) The second volume is greater than a preset volume. To be specific, it may be determined that the volume satisfies the standard channel mode switching condition, when it is detected that the changed volume is greater than the preset volume.

In another example regular call scenario, by performing an operation on the "accept" control 11 in (a) in FIG. 10, the user may trigger the mobile phone 1 to display the ongoing call interface in (b) in FIG. 10, and trigger the mobile phone 1 to enter the standard channel mode. If there are other people around the user and private information needs to be protected, the user may need to decrease the volume of the mobile phone to prevent other people from hearing call content. As shown in (c) in FIG. 10, the user may perform a pressing operation for the first time on a "volume down" button 14 disposed on a side frame of the mobile phone 1. In response to the pressing operation performed for the first time, the mobile phone 1 displays a volume control 13 shown in (d) in FIG. 10. The volume control 13 includes a circular button 13a and a volume slider 13b. The circular button 13a may slide along the volume slider 13b. A specific location of the circular button 13a on the volume slider 13b may be used to indicate a current volume value of the mobile phone 1. Then, as shown in (e) in FIG. 10, the user may continue to perform a pressing operation for the Nth time on the "volume down" button 14, where N is an integer greater than or equal to 2. As shown in (f) in FIG. 10, each time the user presses the "volume down" button 14, the volume of the mobile phone 1 is decreased by one volume level, and the circular button of the volume control 13 slides downward for a preset distance, so that the user can know a decrease amplitude of a current volume. If the mobile phone 1 has entered the private channel mode before the user performs a pressing operation on the "volume down" button 14, the mobile phone 1 continues to maintain the private channel mode, and decreases, based on a quantity of presses on the "volume down" button 14, the volume for playing audio. Alternatively, if the mobile phone 1 is in the standard channel mode and has not entered the private channel mode before the user performs a pressing operation on the "volume down" button 14, after detecting that a private channel mode condition is satisfied, the mobile phone 1 switches from the standard channel mode to the private channel mode, and decreases, based on a quantity of presses on the "volume down" button 14, the volume for playing audio.

Assuming that the volume before the change is a first volume, and the changed volume is a third volume, the private channel mode condition may be any one of the following: (1) The third volume is less than the first volume. To be specific, it may be determined that the private channel mode switching condition is satisfied, provided that a volume decrease is detected. (2) A difference between the first volume and the third volume is greater than or equal to a preset difference. To be specific, it may be determined that the volume satisfies the private channel mode switching condition, when it is detected that a volume decrease amplitude is greater than or equal to the preset difference. (3) A ratio of the first volume to the third volume is greater than or equal to a preset ratio. To be specific, it may be determined that the volume satisfies the private channel mode switching condition, when it is detected that a volume decrease amplitude is greater than or equal to the preset ratio. (4) The third volume is less than or equal to a preset volume. To be specific, it may be determined that the volume satisfies the private channel mode switching condition, when it is detected that the changed volume is less than or equal to the preset volume.

It should be noted that the foregoing embodiment provides descriptions by using examples in which the user implements volume adjustment by performing pressing operations on mechanical buttons such as the "volume up" button 12 and the "volume down" button 14, to perform channel mode switching. This does not constitute any limitation on embodiments of this application. In this embodiment of this application, volume adjustment may be alternatively implemented in other manners. For example, the mobile phone is triggered to increase or decrease the volume by directly performing a leftward/rightward or upward/downward sliding operation on the circular button 13a of the volume control 13, to perform channel mode switching.

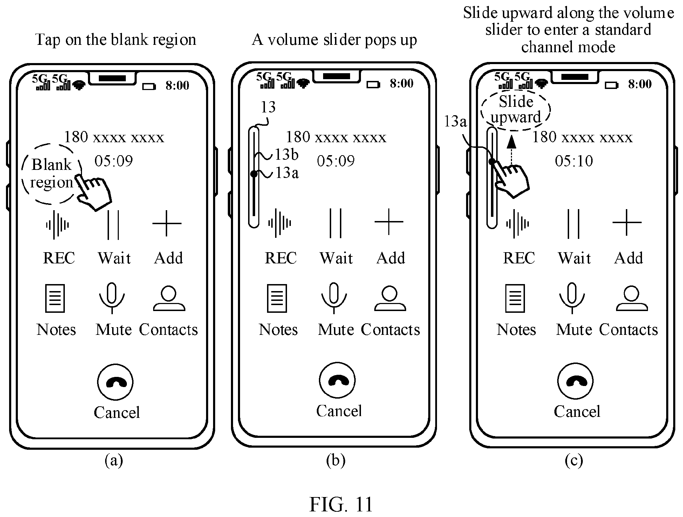

In an example regular call scenario, as shown in (a) in FIG. 11, the user may perform a tap operation or a touch and hold operation on any blank region of a screen. As shown in (b) in FIG. 11, the mobile phone 1 displays a volume control 13 near a location at which the mobile phone 1 is tapped or is touched and held. The volume control 13 includes a circular button 13a and a volume slider 13b. Then, as shown in (c) in FIG. 11, the user may slide the circular button 13a upward along the volume slider 13b, so that the mobile phone 1 increases a volume based on an upward sliding distance, and enters a standard channel mode.

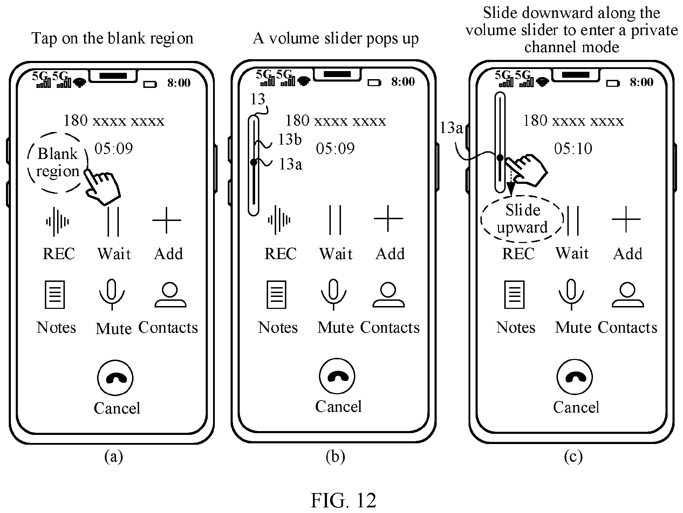

In another example regular call scenario, as shown in (a) in FIG. 12, the user may perform a tap operation or a touch and hold operation on any blank region of a screen. As shown in (b) in FIG. 12, the mobile phone 1 displays a volume control 13 near a location at which the mobile phone 1 is tapped or is touched and held. The volume control 13 includes a circular button 13a and a volume slider 13b. Then, as shown in (c) in FIG. 12, the user may slide the circular button 13a downward along the volume slider 13b, so that the mobile phone 1 decreases a volume based on a downward sliding distance, and enters a private channel mode.

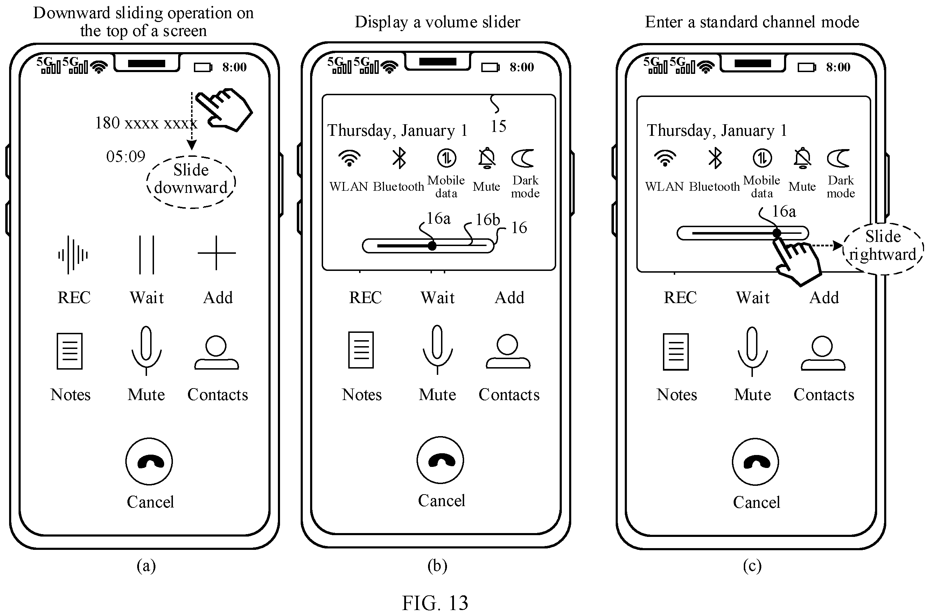

In still another example regular call scenario, as shown in (a) in FIG. 13, the user may perform a downward sliding operation on a top region of a screen. As shown in (b) in FIG. 13, the mobile phone 1 displays a shortcut bar 15. The shortcut bar 15 includes a Bluetooth control, a mobile data control, a mute control, a volume control 16, and the like. The volume control 16 includes a circular button 16a and a volume slider 16b. Then, as shown in (c) in FIG. 13, the user may slide the circular button 16a rightward along the volume slider 16b, so that the mobile phone 1 increases a volume based on a rightward sliding distance, and enters a standard channel mode.

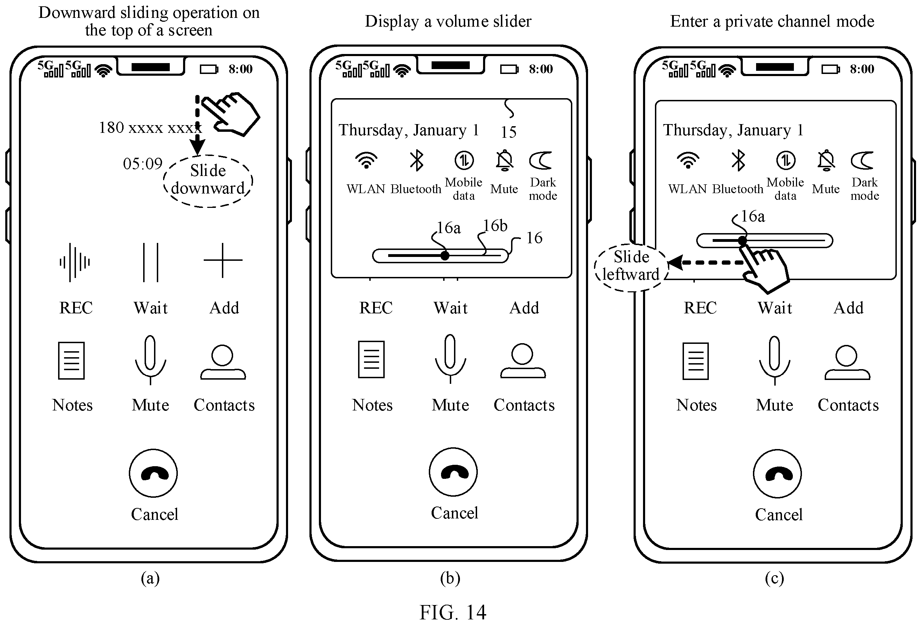

In yet still another example regular call scenario, as shown in (a) in FIG. 14, the user may perform a downward sliding operation on a top region of a screen. As shown in (b) in FIG. 14, the mobile phone 1 displays a shortcut bar 15. The shortcut bar 15 includes a Bluetooth control, a mobile data control, a mute control, a volume control 16, and the like. The volume control 16 includes a circular button 16a and a volume slider 16b. Then, as shown in (c) in FIG. 14, the user may slide the circular button 16a leftward along the volume slider 16b, so that the mobile phone 1 decreases a volume based on a leftward sliding distance, and enters a private channel mode.

The foregoing embodiment describes the specific implementations of channel mode switching by using the incoming call scenario as an example. It should be understood that an implementation of the outgoing call scenario is similar to that of the incoming call scenario. After the mobile phone 1 initiates a call request to the mobile phone 2, the mobile phone 1 configures parameters such as a channel mode and a volume for the mobile phone 1 based on a channel type. If a user using the mobile phone 2 taps an "accept" control, the mobile phone 1 establishes a voice call link with the mobile phone 2, and displays the ongoing call interface shown in (b) in FIG. 9 or (b) in FIG. 10. The channel type of the outgoing call scenario is also a call channel type, and the call channel is corresponding to the standard channel mode and the private channel mode. Therefore, the mobile phone 1 may select, from the standard channel mode and the private channel mode, a channel mode that satisfies a condition. In addition, in a call process, the mobile phone 1 may adjust, in response to a user operation, the volume to a volume corresponding to the user operation, and switch to a channel mode corresponding to the current volume. For a specific implementation, refer to the detailed descriptions of the incoming call scenario. Details are not described herein again.

A second example application scenario is third-party application call scenarios.

The third-party application call scenarios include a video call scenario and a voice call scenario. In the video call scenario, a user needs to watch a video image of the other party, and therefore the user needs to keep a specific distance away from a screen. In this case, to clearly hear sound from a peer, a mobile phone usually uses a speaker mode in which sound is played through a speaker. In the voice call scenario, a user does not need to watch a video image of the other party. In this case, a mobile phone may use a speaker mode in which sound is played through a speaker, or may use a standard channel mode or a private channel mode in which sound is played through an earpiece.

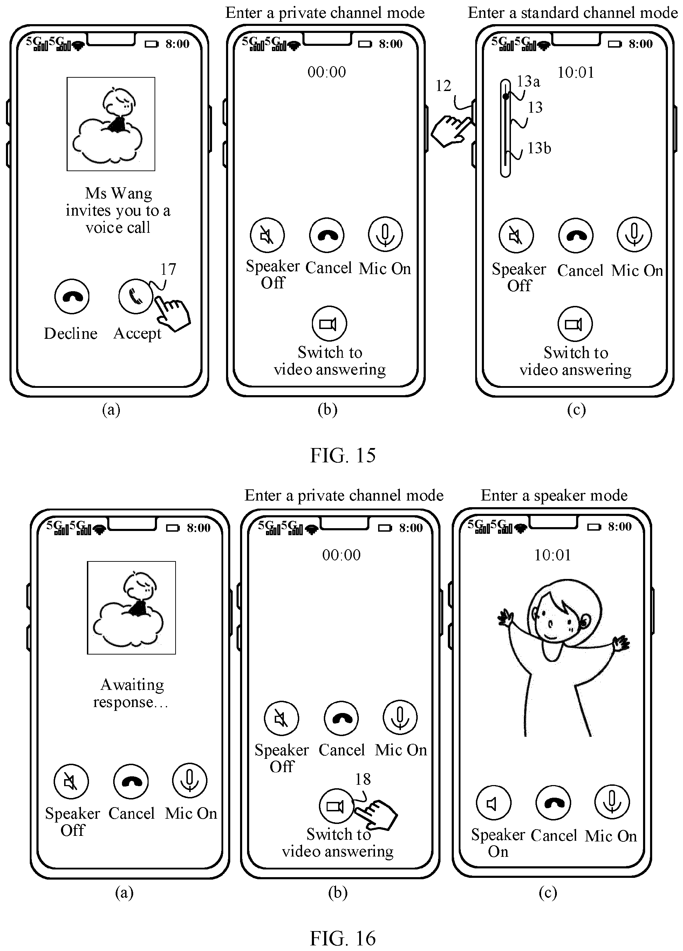

For example, FIG. 15 to FIG. 17 show three third-party application call scenarios.

In an example third-party application call scenario, when a mobile phone 2 sends a voice call request to a mobile phone 1 to invite the mobile phone 1 to a voice call, the mobile phone 1 displays a voice call request interface shown in (a) in FIG. 15. The voice call request interface includes a "decline" control and an "accept" control 17. If a user taps the "accept" control 17, the mobile phone 1 configures parameters such as a channel mode and a volume for the mobile phone 1 based on a current channel type in response to the user operation. The channel type in this scenario is a voice call type. Therefore, the mobile phone 1 may select, from a standard channel mode and a private channel mode, a channel mode that satisfies a condition, and establish a voice call link with the mobile phone 2.

After establishing the voice call link with the mobile phone 2, the mobile phone 1 displays an ongoing voice call interface shown in (b) in FIG. 15, and enters the private channel mode. The mobile phone 1 may collect a sound signal of the user by using a microphone, convert the sound signal into an audio signal by using an ADSP, and then send the audio signal to the mobile phone 2, so that the mobile phone 2 can play the audio signal. In addition, the mobile phone 1 may convert an audio signal from the mobile phone 2 into a sound signal, and play the sound signal in the private channel mode based on a historical volume value.

In a call process, the user can adjust the volume and/or a call mode of the mobile phone 1 depending on an actual requirement. If an external environment is excessively noisy, but private information does not need to be protected or the user simply feels that a current volume is excessively low, the user may increase the volume of the mobile phone 1 to ensure hearing experience of the user. As shown in (c) in FIG. 15, the user may perform a pressing operation for one or more times on a "volume up" button 12 disposed on a side frame of the mobile phone 1. Each time the user presses the "volume up" button 12, the volume of the mobile phone 1 is increased by one volume level, and a circular button 13a slides upward along a volume slider 13b for a distance, so that the user can know an increase amplitude of a current volume. Because the mobile phone 1 is in the private channel mode and has not entered the standard channel mode before the user performs a pressing operation on the "volume up" button 12, after detecting that a standard channel mode switching condition is satisfied, the mobile phone 1 may switch from the private channel mode to the standard channel mode. For the standard channel mode switching condition, refer to the descriptions of the foregoing embodiment. Details are not described herein again.

In another example third-party application call scenario, when the mobile phone 1 sends a voice call request to the mobile phone 2 to invite the mobile phone 2 to a voice call, the mobile phone 1 displays an interface for waiting for the other party to answer the voice call shown in (a) in FIG. 16. The interface for waiting for the other party to answer the voice call includes a "cancel" control, a "speaker off" control, and a "mic on" control. If a user using the mobile phone 2 answers the voice call, the mobile phone 1 may configure parameters such as a channel mode and a volume for the mobile phone 1 based on a current channel type, and establish a voice call link with the mobile phone 2. The channel type in this scenario is a voice call type. Therefore, the mobile phone 1 may select, from the standard channel mode and the private channel mode, a channel mode that satisfies a condition.

After establishing the voice call link with the mobile phone 2, the mobile phone 1 displays an ongoing voice call interface shown in (b) in FIG. 16, and enters the private channel mode. The mobile phone 1 may collect a sound signal of the user by using a microphone, convert the sound signal into an audio signal by using an ADSP, and then send the audio signal to the mobile phone 2, so that the mobile phone 2 can play the audio signal. In addition, the mobile phone 1 may convert an audio signal from the mobile phone 2 into a sound signal, and play the sound signal in the private channel mode based on a historical volume value.

A video call function is further provided for the third-party application call scenarios. Therefore, the mobile phone 1 may switch from a voice call to a video call. As shown in (b) in FIG. 16, if the user taps a "switch to video answering" control 18 of the ongoing voice call interface, the mobile phone 1 turns on a camera and a speaker of the mobile phone 1 in response to the operation on the "switch to video answering" control 18, to switch from the ongoing voice call interface to an ongoing video call interface shown in (c) in FIG. 16. The ongoing video call interface includes a video image from the mobile phone 2. The "speaker off" control is switched to a "speaker on" control. It should be understood that in the video call scenario, the user needs to watch the video image of the other party, and therefore the user needs to keep a specific distance away from a screen. In this case, to help the user clearly hear sound from the peer, the mobile phone usually uses a speaker mode in which sound is played through the speaker.

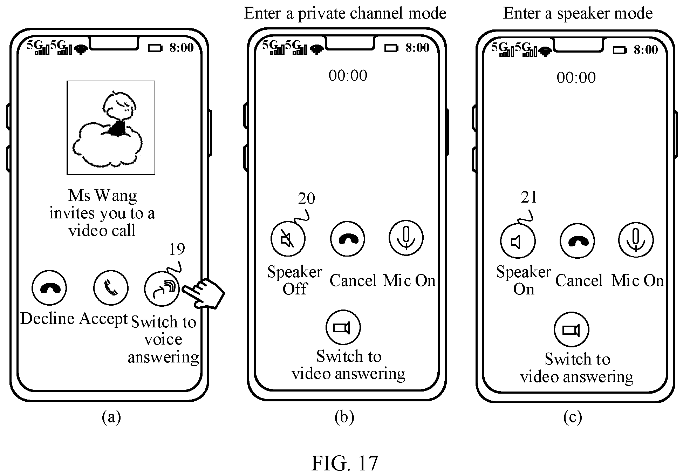

In still another example third-party application call scenario, when the mobile phone 2 sends a video call request to the mobile phone 1 to invite the mobile phone 1 to a video call, the mobile phone 1 displays a video call request interface shown in (a) in FIG. 17. The video call request interface includes a "decline" control, an "accept" control, and a "switch to voice answering" control 19. If the user taps the "accept" control, the mobile phone 1 establishes a video call link with the mobile phone 2 in response to the user operation, and then sets a channel mode to the speaker mode in which sound is played through a speaker. If the user taps the "switch to voice answering" control 19, the mobile phone 1 configures parameters such as a channel mode and a volume for the mobile phone 1 based on a current channel type in response to the user operation. The channel type in this scenario is a voice call type. Therefore, the mobile phone 1 may select, from the standard channel mode and the private channel mode, a channel mode that satisfies a condition, and establish a voice call link with the mobile phone 2.

After establishing the voice call link with the mobile phone 2, the mobile phone 1 displays an ongoing voice call interface shown in (b) in FIG. 17, and enters the private channel mode. The mobile phone 1 may collect a sound signal of the user by using a microphone, convert the sound signal into an audio signal by using an ADSP, and then send the audio signal to the mobile phone 2, so that the mobile phone 2 can play the audio signal. In addition, the mobile phone 1 may convert an audio signal from the mobile phone 2 into a sound signal, and play the sound signal in the private channel mode based on a historical volume value.

In the voice call scenario, if the user using the mobile phone 1 wants to share voice content with other surrounding people, as shown in (b) in FIG. 17, the user may tap a "speaker off" control 20 of the ongoing voice call interface. In this case, the mobile phone 1 turns on the speaker of the mobile phone 1 in response to the operation on the "speaker off" control 20 to play sound through the speaker, and keeps displaying the ongoing voice call interface. The "speaker off" control 20 is switched to a "speaker on" control 21 shown in (c) in FIG. 17 for display. It should be understood that in the voice call scenario, because a volume in the speaker mode is high, when the user wants to share voice content with other surrounding people, the user may use the speaker mode to play sound at a high volume.

It should be noted that this application describes only three example third-party application call scenarios. During actual implementation, the channel mode switching method provided in embodiments of this application can also be applied to any other possible third-party application call scenarios. For example, when the mobile phone 1 is making a voice call, if a current channel mode is the standard channel mode, the user may decrease a volume, and after a private call mode condition is satisfied, the mobile phone 1 switches from the standard channel mode to the private channel mode. For another example, when the mobile phone 1 switches from an ongoing video call to a voice call, the user does not need to manually adjust a volume, and the mobile phone 1 automatically switches to the standard channel mode or the private channel mode. For still another example, when the mobile phone 1 is making a voice call, if the user keeps an ear close to an earpiece of the mobile phone 1, the mobile phone 1 is screened off, and switches from the speaker mode to the standard channel mode or the private channel mode.

The foregoing embodiment describes the specific implementations of channel mode switching in the third-party application call scenarios. In the third-party application call scenarios, a channel mode that satisfies a condition may be selected from the standard channel mode and the private channel mode at an initial moment of establishing a voice call link. This is similar to the regular call scenarios. During a voice call, passing modes in the third-party application call scenarios may be switched between each other in the following manners: switching from the private channel mode to the standard channel mode by increasing a volume; switching from the standard channel mode to the private channel mode by decreasing a volume; switching from the private channel mode or the standard channel mode to the speaker mode by performing an operation on the "speaker off" control and the "switch to video answering" control; and switching from the speaker mode to the private channel mode or the standard channel mode by performing an operation on the "speaker on" control and the "switch to voice answering" control.

At the initial moment of establishing the voice call link, the mobile phone 1 may further select, from the standard channel mode and the private channel mode in any one of the following manners, a channel mode that satisfies a condition. Manner 1: The mobile phone 1 may preset the private channel mode to be at a high priority and preset the standard channel mode to be at a low priority. When it is determined that the channel type is a call channel, the mobile phone 1 directly configures the current channel mode to the private channel mode. Manner 2: The mobile phone 1 may prestore a channel mode used for a regular call last time. If the channel mode used for the regular call last time is the standard channel mode, the mobile phone 1 configures the current channel mode to the standard channel mode; or if the channel mode used for the regular call last time is the private channel mode, the mobile phone 1 configures the current channel mode to the private channel mode. Manner 3: The mobile phone 1 may obtain a current environment parameter. If the current environment parameter indicates that an external environment is noisy, the mobile phone 1 configures the channel mode to the private channel mode; or if the current environment parameter indicates that an external environment is quiet, the mobile phone 1 configures the channel mode to the standard channel mode.

A third example application scenario is voice message playing scenarios.

In a communication scenario, two parties may exchange voice chat messages in addition to text chat messages. In this embodiment of this application, a mobile phone may play a voice message from a peer of a call in any one of the following playing modes: a speaker mode for play through a speaker, a standard channel mode for play through an earpiece, and a private channel mode implemented by using software/hardware.

The following uses an example for description in which the first audio signal emitted by the earpiece and the second audio signal emitted by the speaker (both the second audio signal and the first audio signal are analog audio signals, and the phases of the second audio signal and the first audio signal are opposite) cancel out each other to implement the private channel mode, as provided in FIG. 3.

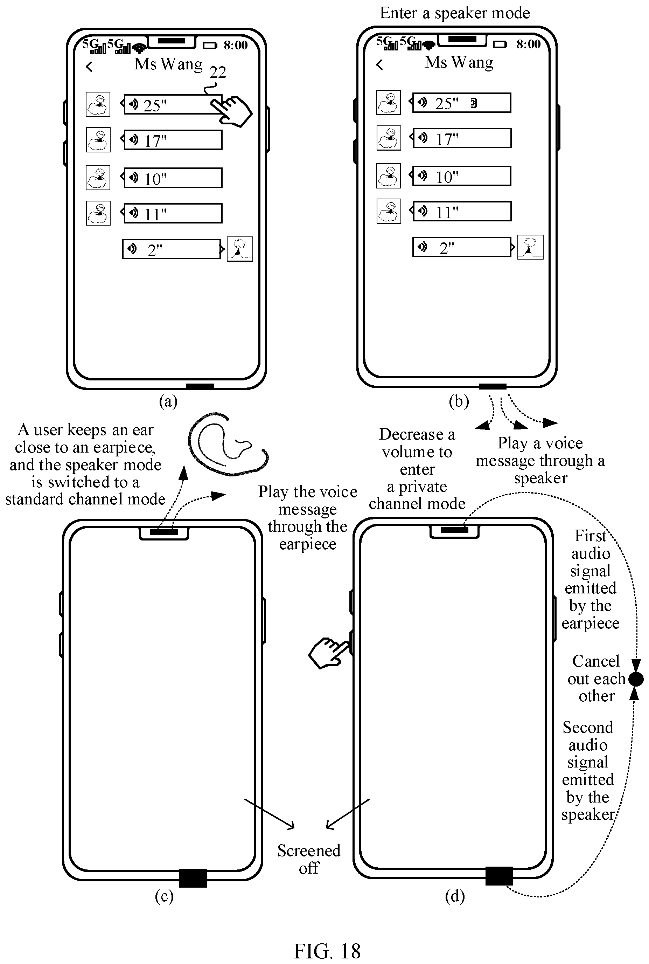

As shown in (a) in FIG. 18, a mobile phone 1 may display a conversation interface with Ms Wang. The conversation interface includes a plurality of voice messages from Ms Wang and one voice message from a user of the mobile phone 1. If the user taps on the 1^{st} voice message 22 (or any other voice message) on the conversation interface, and a distance between the user and the mobile phone 1 is greater than or equal to a preset distance, as shown in (b) in FIG. 18, the mobile phone 1 automatically enters a speaker mode, to play content of the voice message at a volume 1 through a speaker.

If the user does not expect played content to be heard by other surrounding people, or does not want to disturb other surrounding people, as shown in (c) in FIG. 18, the user may keep an ear close to an earpiece of the mobile phone 1. The mobile phone 1 detects that the distance from the user is less than the preset distance, and switches from the speaker mode to a standard channel mode, to play the content of the voice message at a volume 2 through the earpiece. The volume 2 is less than the volume 1.

During playing of the content of the voice message at the volume 2 through the earpiece, if the user still feels that sound is high, and the content of the voice message may be heard by other surrounding people, as shown in (d) in FIG. 18, the user may decrease the volume by performing a pressing operation on a "volume down" button. Each time the user presses the "volume down" button, the volume of the mobile phone 1 is decreased by one volume level, and a circular button of a volume control slides downward for a preset distance. If the mobile phone 1 is in the standard channel mode and has not entered a private channel mode before the user performs a pressing operation on the "volume down" button, after detecting that a private channel mode condition is satisfied, the mobile phone 1 switches from the standard channel mode to the private channel mode. For the private channel mode switching condition, refer to the descriptions of the foregoing embodiment. Details are not described herein again.

It should be noted that the foregoing embodiment provides descriptions by using an example in which the mobile phone 1 sequentially switches from the speaker mode to the standard channel mode, and then to the private channel mode. This does not constitute any limitation on embodiments of this application. This embodiment of this application further provides another channel mode switching method.

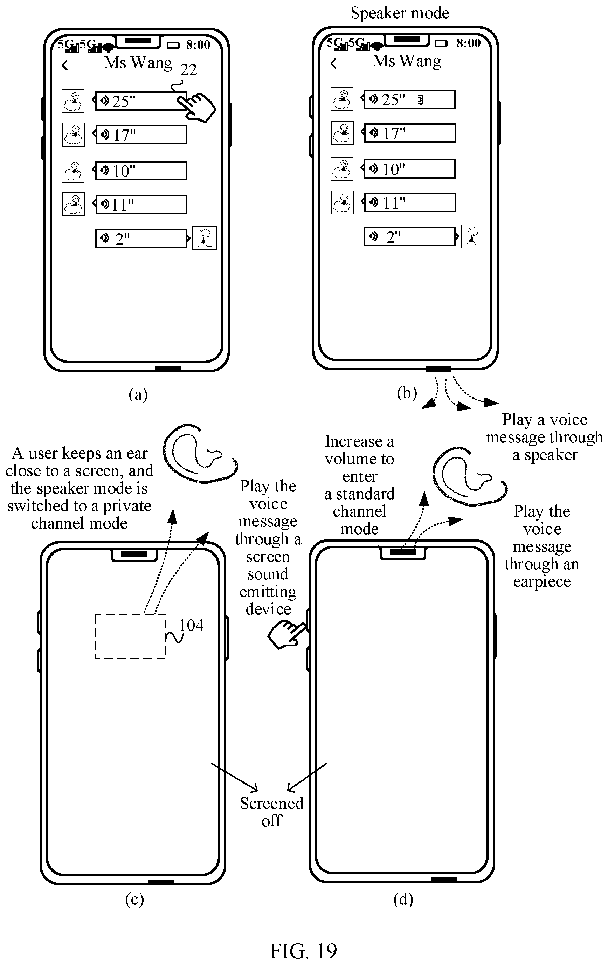

As shown in (a) in FIG. 19, after a user taps on the 1^{st} voice message 22 on a conversation interface, a mobile phone 1 detects, in real time, whether the user exists within a preset distance. If it is detected that a distance between the user and the mobile phone 1 is greater than the preset distance, as shown in (b) in FIG. 19, a speaker mode is used to play the 1^{st} voice message at a volume 1 through a speaker. Then, the mobile phone 1 may continue to detect whether the user exists within the preset distance. If the user may keep an ear close to an earpiece of the mobile phone 1, the mobile phone 1 detects that the distance between the user and the mobile phone 1 is less than the preset distance, and a channel type of the mobile phone 1 is also a call channel type. In this case, the mobile phone 1 may select, from a standard channel mode and a private channel mode by using the method provided in the foregoing embodiment, a channel mode that satisfies a condition.

An example is used in which the mobile phone 1 chooses the private channel mode. As shown in (c) in FIG. 19, the mobile phone 1 switches from the speaker mode to the private channel mode, and plays the 1^{st} voice message at a volume 3. The volume 3 is less than the volume 1. In a process of playing the voice message at the volume 3, if the user feels that the user cannot clearly hear voice content due to excessively low sound, but does not want to play the voice message through the speaker to cause other surrounding people to hear the voice content, as shown in (d) in FIG. 19, the user may increase the volume by performing a pressing operation on a "volume up" button. Each time the user presses the "volume up" button, the volume of the mobile phone 1 is increased by one volume level, and a circular button of a volume control slides upward for a preset distance. If the mobile phone 1 is in the private channel mode and has not entered the standard channel mode before the user performs a pressing operation on the "volume up" button, after detecting that a standard channel mode condition is satisfied, the mobile phone 1 switches from the private channel mode to the standard channel mode. For the standard channel mode switching condition, refer to the descriptions of the foregoing embodiment. Details are not described herein again.

Further, as shown in (c) in FIG. 18, (d) in FIG. 18, (c) in FIG. 19, and (d) in FIG. 19, when the distance between the mobile phone 1 and the user is less than the preset distance, the user may keep the ear close to a screen. In this case, the user may no longer need to watch screen content and only needs to listen to sound. Therefore, the mobile phone 1 can switch the screen from a screen-on state to a screen-off state, to reduce power consumption. It should be understood that, for all of the regular call scenarios, the third-party application call scenarios, and the voice message playing scenarios, the mobile phone 1 can switch the screen from the screen-on state to the screen-off state when the distance from the user is less than the preset distance. Certainly, when the distance between the mobile phone 1 and the user is less than the preset distance, the mobile phone 1 may alternatively continue to maintain the screen-on state depending on an actual requirement. This is not limited in embodiments of this application.

In a process in which the electronic device plays the voice message, the user may move away from or close to the electronic device at any time, and may also increase or decrease the volume at any time. Therefore, the electronic device can adjust the channel mode in real time based on the detected distance between the user and the electronic device and whether there is a volume adjustment operation.

That the current channel mode of the mobile phone 1 is the private channel mode is used as an example, and the following adjustment manners may be specifically included:

Adjustment manner 1: After the mobile phone 1 switches from the standard channel mode to the private channel mode, if a volume increase operation of the user is not received and the distance between the mobile phone 1 and the user remains less than the preset distance (that is, the user exists within the preset distance), the mobile phone 1 may sequentially play the 2^{nd} voice message, the 3^{rd} voice message, and so on still in the private channel mode after playing of the 1^{st} voice message is completed, to directly complete playing of all the voice messages.

Adjustment manner 2: After the mobile phone 1 switches from the standard channel mode to the private channel mode, if a volume increase operation is received, the standard channel mode switching condition is satisfied, and the distance between the mobile phone 1 and the user remains less than the preset distance (that is, the user exists within the preset distance), the mobile phone 1 may play remaining to-be-played voice messages at an increased volume in the standard channel mode, to directly complete playing of all the voice messages. The standard channel mode switching condition is any one of the following: The mobile phone 1 detects a volume increase, the mobile phone 1 detects that a volume increase value is greater than or equal to a preset value, and a current volume value of the mobile phone 1 is greater than a preset volume threshold.

Adjustment manner 3: After the mobile phone 1 switches from the standard channel mode to the private channel mode, if a volume increase operation is received, the standard channel mode switching condition is not satisfied, and the distance between the mobile phone 1 and the user remains less than the preset distance (that is, the user exists within the preset distance), the mobile phone 1 may play remaining to-be-played voice messages at an increased volume still in the private channel mode, to directly complete playing of all the voice messages.

Adjustment manner 4: After the mobile phone 1 switches from the standard channel mode to the private channel mode, if the distance between the mobile phone 1 and the user is greater than or equal to the preset distance (that is, the user does not exist within the preset distance), the mobile phone 1 may play remaining to-be-played voice messages in the speaker mode at a volume (for example, a sixth volume) greater than that in the private channel mode and the standard channel mode, to directly complete playing of all the voice messages. It should be understood that, when the user does not exist within the preset distance, it indicates that the user is far away from the mobile phone 1. To enable the user to hear sound clearly, the channel mode needs to be switched to the speaker mode at a high volume, for example, sound is played through the speaker.

It should be understood that, when the current channel mode of the mobile phone 1 is the standard channel mode, if the user decreases the volume or moves away from the mobile phone 1, the mobile phone 1 may adjust the channel mode and the volume by using the foregoing four adjustment manners. Details are not described herein again.

A fourth example application scenario is a scenario of performing automatic channel mode switching based on external ambient noise.

The foregoing embodiments provide descriptions by using examples of switching to a channel mode corresponding to an adjusted volume, in response to a volume adjustment operation of the user. This does not constitute any limitation on embodiments of this application. This embodiment of this application provides another method for performing automatic channel mode switching based on external ambient noise.

The following uses an example for description in which the first audio signal emitted by the earpiece and the second audio signal emitted by the speaker (both the second audio signal and the first audio signal are analog audio signals, and the phases of the second audio signal and the first audio signal are opposite) cancel out each other to implement the private channel mode, as provided in FIG. 3.

In a voice communication scenario, for example, when a mobile phone 1 receives an incoming call request from a mobile phone 2, the mobile phone 1 sends an outgoing call request to the mobile phone 2, the mobile phone 1 receives a voice call request from the mobile phone 2, the mobile phone 1 sends a voice call request to the mobile phone 2, the mobile phone 1 plays a voice message from the mobile phone 2, or the like, the mobile phone 1 may determine that a current channel type is a call channel type, and then select, from a standard channel mode and a private channel mode, a channel mode that satisfies a condition. For a specific implementation in which the mobile phone 1 selects, from the standard channel mode and the private channel mode, the channel mode that satisfies the condition, refer to the descriptions of the foregoing embodiments. Details are not described herein again.

If the mobile phone 1 selects the private channel mode, but loudness of external noise is low, it indicates that an environment of a user is quiet, and there is a low probability that there are other surrounding people. In this case, privacy of the user may not need to be protected. Alternatively, if the mobile phone selects the standard channel mode, but loudness of external noise is high, it indicates that an environment of a user is noisy, and there is a high probability that there are other surrounding people. In this case, privacy of the user may need to be protected.

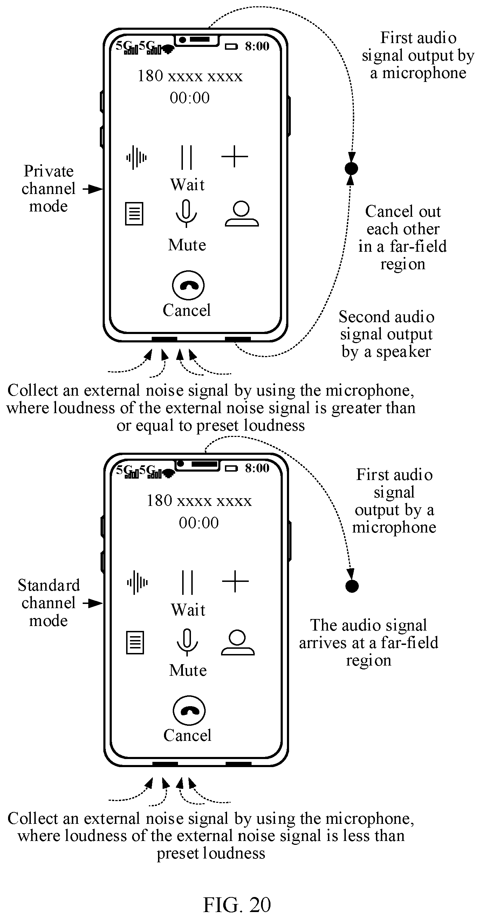

For example, as shown in FIG. 20, a microphone may be further disposed on a side frame of the mobile phone 1. After the mobile phone 1 selects, from the standard channel mode and the private channel mode by using the method in the foregoing embodiment, the channel mode that satisfies the condition, the mobile phone 1 turns on the microphone, and collects an external noise signal by using the microphone. The mobile phone 1 performs digital signal processing on the external noise signal, and determines loudness of external noise.

In an example, if the loudness of the external noise is greater than or equal to preset loudness, it indicates that the external environment of the user is noisy, and there is a high probability that there are other surrounding people. In this case, privacy of the user may need to be protected. The mobile phone 1 determines whether the mobile phone 1 is currently in the private channel mode. If the mobile phone 1 is in the private channel mode, the private channel mode may continue to be maintained. If the mobile phone 1 is in the standard channel mode, privacy of the user may be leaked, and the standard channel mode needs to be switched to the private channel mode. When the private channel mode is used, the earpiece may play the first audio signal while the speaker plays the second audio signal. Because the phases of the first audio signal and the second audio signal are opposite, the first audio signal and the second audio signal cancel out each other in a preset region around the mobile phone 1, so that leakage of voice communication content is reduced. In this way, privacy and security of the user can be protected.

In another example, if the loudness of the external noise is less than preset loudness, it indicates that the external noise is small and the environment of the user is quiet, and there is a low probability that there are other surrounding people. In this case, privacy of the user may not need to be protected. The mobile phone 1 determines whether the mobile phone 1 is currently in the standard channel mode. If the mobile phone 1 is in the standard channel mode, the standard channel mode may continue to be maintained. If the mobile phone 1 is in the private channel mode, because loudness, audio quality, or the like in the private channel mode may be limited by software and hardware conditions, and the like, the private channel mode cannot achieve audio playing effect of the standard channel mode. Therefore, the mobile phone 1 may need to be switch from the private channel mode to the standard channel mode. When the standard channel mode is used, the first audio signal may be played through the earpiece, and no audio signal is played through the speaker, so that the first audio signal can reach a preset region around the mobile phone 1. This ensures hearing experience of the user.

The foregoing embodiment provides descriptions by using an example in which the microphone is used to collect the external noise to determine whether to perform channel mode switching. However, when the external environment of the user is noisy, it is possible that there are no other people around the user. For example, when the user is on the road, vehicle sound causes loud noise, but there may be no other people around the user. In this case, the standard channel mode does not need to be switched to the private channel mode. Alternatively, when the external environment of the user is quiet, there may still be other people around the user. For example, when the user participates in a conference, although a conference environment is quiet, there are other people around the user. In this case, the standard channel mode needs to be switched to the private channel mode. In view of these problems, this embodiment of this application further provides another channel mode switching method.

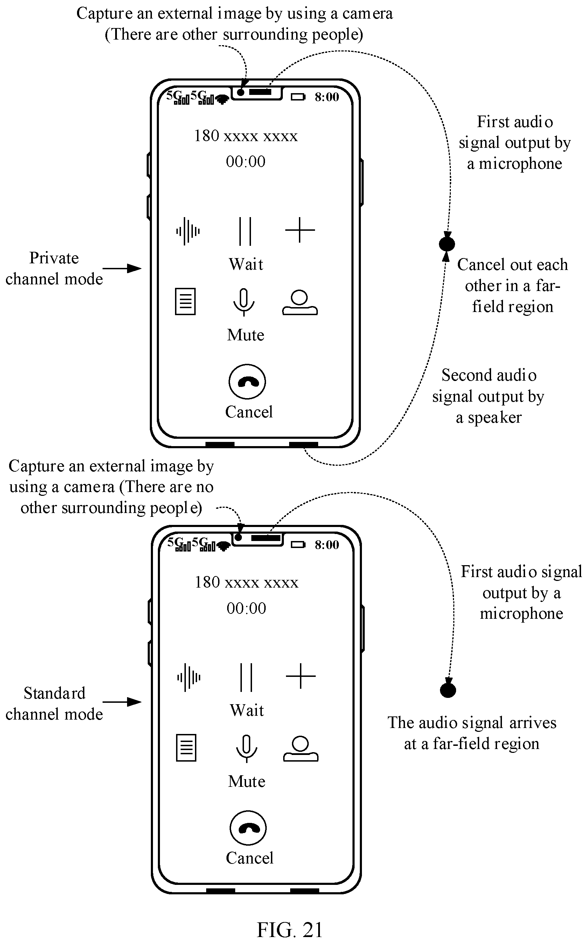

For example, as shown in FIG. 21, a camera may be further disposed on a side frame of the mobile phone 1. After the mobile phone 1 selects, from the standard channel mode and the private channel mode by using the method in the foregoing embodiment, the channel mode that satisfies the condition, the mobile phone 1 turns on the camera, and photographs an external image around the mobile phone 1 by using the camera. The mobile phone 1 performs image analysis on the external image to determine whether there are other surrounding people. When there are other surrounding people, the private channel mode is entered. When there are no other surrounding people, the standard channel mode is entered.

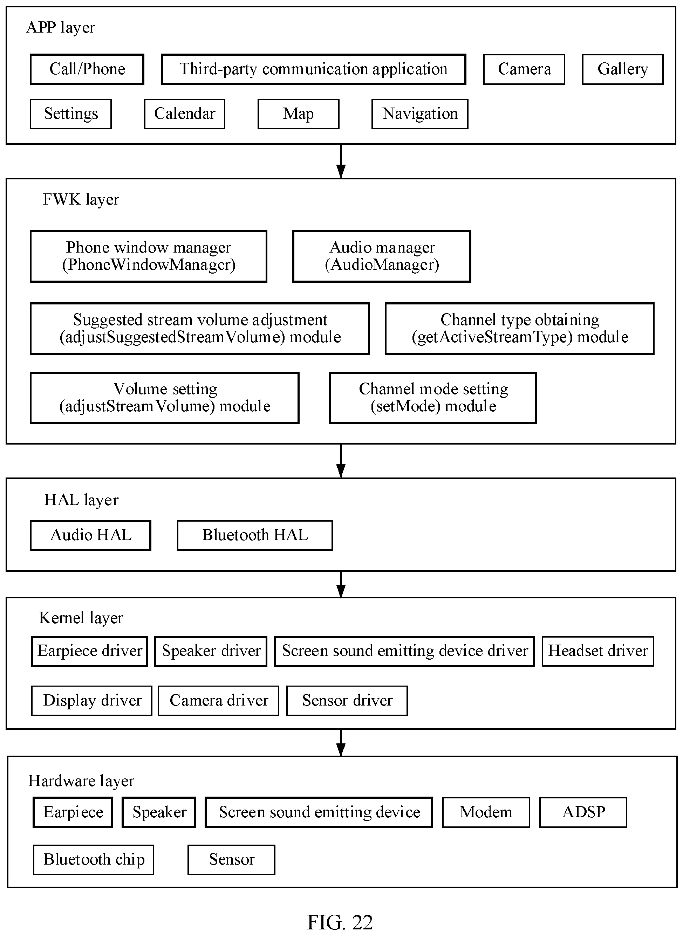

The following describes an architecture of an electronic device with reference to FIG. 22.

FIG. 22 is a diagram of the architecture of the electronic device according to an embodiment of this application.

As shown in FIG. 22, the electronic device may use a layered architecture, to divide software into several layers, and each layer has clear roles and tasks. The layers communicate with each other through an interface. In some embodiments, the software layers are sequentially classified into four layers from top to bottom: an application (application, APP) layer, a framework (framework, FWK) layer, a hardware abstraction layer (hardware abstract layer, HAL), and a kernel (Kernal) layer. In addition to the software layers, FIG. 22 further shows a hardware layer.

The application layer may include a series of application packages, such as a call/phone (phone) application, a third-party communication application, camera, gallery, settings, calendar, map, and navigation. When these application packages are run, an application programming interface (application programming interface, API) may be used to access various service modules provided by the application framework layer, and executes corresponding intelligent services. The applications have visual user interfaces. For example, when the mobile phone makes a call or answers a call from another device by using the call application, the mobile phone may display the call interfaces shown in FIG. 9 to FIG. 14. For another example, when the mobile phone makes a voice call with another device by using the third-party communication application, the mobile phone may display the voice call interfaces shown in FIG. 15 to FIG. 17. For still another example, when the mobile phone plays a voice message from another device, the mobile phone may display the voice message interfaces shown in FIG. 18 to FIG. 19. When a user performs an operation on any control on these interfaces, an application is used to perform a control operation through the application programming interface, for example, starting a call, ending a call, or playing a voice message.

The framework layer is configured to support running of applications at the application layer. For example, the frame layer may include a phone window manager (PhoneWindowManager), an audio manager (AudioManager), a suggested stream volume adjustment (adjustSuggestedStreamVolume) module, a channel type obtaining (getActiveStreamType) module, a volume setting (adjustStreamVolume) module, a channel mode setting (setMode) module, and the like. The phone window manager (PhoneWindowManager) is configured to manage a window and an interface of an application, for example, update an interface in response to a user operation. The audio manager (AudioManager) is configured to provide the API for controlling and accessing an audio stream, a volume value, and a ring mode of an application. The suggested stream volume adjustment (adjustSuggestedStreamVolume) module is configured to adjust a volume of a most closely related stream or a given pushback stream. The channel type obtaining (getActiveStreamType) module is configured to obtain an audio/channel type (type). For example, the audio/channel type (type) may be a call channel type, a media channel type, or a Bluetooth channel type. The volume setting (adjustStreamVolume) module is configured to: obtain a historical volume value, and set a volume for current audio based on the historical volume value. The channel mode setting (setMode) module is configured to set a channel mode based on the audio/channel type, for example, a standard channel mode, a private channel mode, or a speaker mode. For the three channel modes, refer to the descriptions of the foregoing embodiment. Details are not described herein again.

The hardware abstraction layer provides encapsulation of a Linux kernel driver, and provides an interface for the upper layers. The hardware abstraction layer hides hardware interface details of a specific platform, and provides a virtual hardware platform for an operating system, so that the operating system is hardware-agnostic, and can be ported on a plurality of platforms. For example, the hardware abstraction layer includes an audio HAL and a Bluetooth HAL. The audio HAL defines a standard interface that is of the mobile phone that needs to be invoked for an audio service to ensure normal running of an audio hardware function, and is responsible for associating an audio stream management (AudioFlinger) module and an audio policy (AudioPolicy) module with a hardware device.

The kernel layer is a layer between hardware and software. The kernel layer includes at least an earpiece driver, a speaker driver, a screen sound emitting device driver, a headset driver, a display driver, a camera driver, a sensor driver, and the like. The earpiece driver is mainly responsible for interaction with an earpiece. The speaker driver is mainly responsible for interaction with a speaker. The screen sound emitting device driver is mainly responsible for interaction with a screen sound emitting device. In this embodiment of this application, the kernel layer includes one or more pulse code modulation (pulse code modulation, PCM) virtual devices. The PCM virtual device is also referred to as a PCM logical device, a PCM intermediate layer, or a PCM native (native) service. The PCM virtual device is a PCM device file. In a Linux system, all devices are finally abstracted into one or more device files accessible to user space. A process in the user space implements control of hardware by reading and writing these device files. For playing sound or recording sound, the audio HAL and the Bluetooth HAL are implemented by reading and writing the PCM device file. Call recording in an Android system needs to be implemented by obtaining recorded data from a specified PCM virtual device. The recorded data includes sound of two parties in a call. The PCM virtual device may be specified by selecting an audio scene (use case), and one PCM virtual device may be corresponding to a plurality of use cases.

The hardware layer provides various hardware devices, such as an earpiece, a speaker, a screen sound emitting device, a modem (modem), an ADSP, a Bluetooth chip, and a sensor. This is not limited in embodiments of this application. The earpiece and the speaker are configured to emit a sound signal or an audio signal, and the screen sound emitting device is configured to drive a screen to emit sound. The modem is configured to: convert an analog signal from a peer of a call into a digital signal, and convert a digital signal from the ADSP into an analog signal. The ADSP is configured to process audio data, for example, perform sound effect processing on voice data, perform audio mixing processing on a plurality of pieces of voice data, and the like. The Bluetooth chip is configured to: establish a Bluetooth connection to a Bluetooth device, transmit Bluetooth data, and the like. According to the descriptions of the standard channel mode, the private channel mode, and the speaker mode in embodiments of this application, during use of different channel modes, the electronic device uses different sound emitting components (for example, one or more of the earpiece, the speaker, and the screen sound emitting device) to emit sound.

It should be noted that the layers in the software structure and the components included in the layers shown in FIG. 22 do not constitute any specific limitation on the electronic device. In some other embodiments, the electronic device may include more layers than those shown in the figure, for example, a system library (FWK LIB) layer. Each layer may include more or fewer components than those shown in the figure. Alternatively, the foregoing functional modules may be combined into one functional module, and the layers may be combined into one layer. For example, the earpiece driver, the speaker driver, and the screen sound emitting device may be combined into an audio driver.

It can be understood that, to implement the channel mode switching method in embodiments of this application, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application with reference to embodiments.

The following describes the channel mode switching method provided in embodiments of this application, by using an example in which the channel mode switching method is performed by the modules in the software structure diagram shown in FIG. 22.

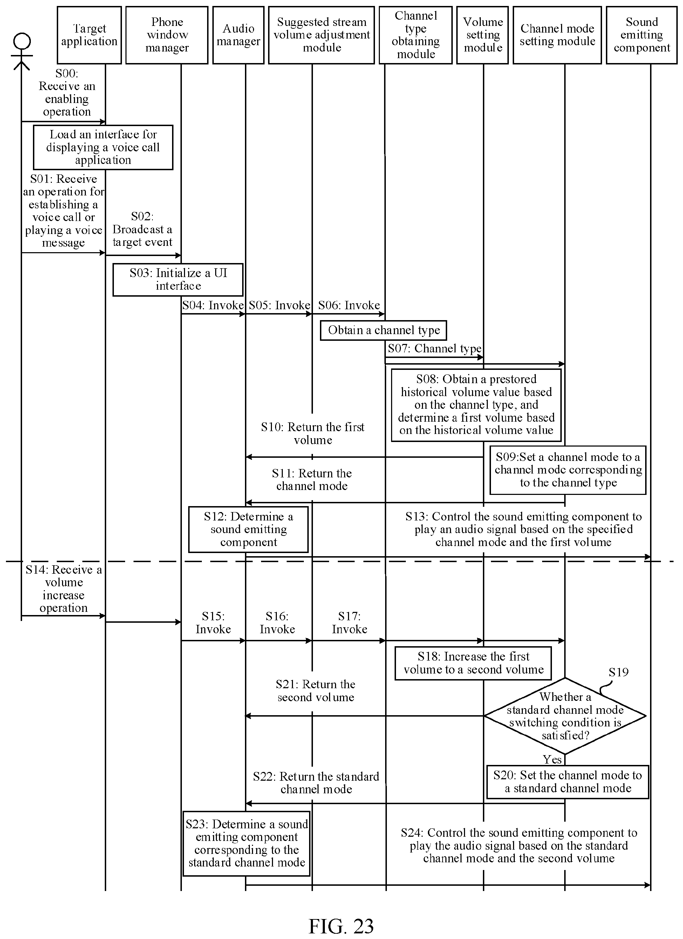

For example, FIG. 23 is a schematic flowchart of a channel mode switching method according to an embodiment of this application. The method can be applied to the channel mode switching scenarios shown in FIG. 9 to FIG. 19, or other audio playing scenarios. As shown in FIG. 23, the method may include the following S00 to S24. S00 to S13 are used to describe how to set a channel mode before a volume adjustment operation of a user is received, and S14 to S24 are used to describe how to set a channel mode after a volume increase operation of the user is received.

S00: Receive an operation that is input by the user and that is for enabling a target application, and load an interface for displaying a voice call application.

S01: The target application receives an operation that is input by the user and that is for requesting to establish a voice call or requesting to play a voice message.

The target application may be referred to as a voice call application, and may be specifically: an application having a real-time voice communication function, an application having both a real-time voice communication function and a video communication function, or an application having a function of exchanging voice messages and text messages.

For example, when the target application is a call/phone (phone) application, the operation for requesting to establish the voice call may be the tap operation on the "accept" control 11 shown in (a) in FIG. 9 or (a) in FIG. 10.

For another example, when the target application is a third-party communication application, the operation for requesting to establish the voice call may be the tap operation on the "accept" control 17 shown in (a) in FIG. 15, the confirmation operation for sending the voice call request to the other party shown in (a) in FIG. 16, or the tap operation on the "switch to voice answering" control 19 shown in (a) in FIG. 17.

For still another example, when the target application is a third-party communication application, the operation for requesting to play the voice message may be the tap operation on the 1^{st} voice message 22 shown in (a) in FIG. 18 or (a) in FIG. 19.

S02: The target application broadcasts a target event to initialize each module.

For example, after receiving the operation for requesting to establish the voice call or requesting to play the voice message, the target application may generate the target event for establishing the voice call or playing the voice message, and broadcast the target event, to initialize each module.

S03: The phone window manager (PhoneWindowManager) initializes a user interface (user interface, UI) based on the target event detected through listening.

For example, when the operation for requesting to establish the voice call is the tap operation on the "accept" control 11 shown in (a) in FIG. 9, the phone window manager (PhoneWindowManager) updates the incoming call interface shown in (a) in FIG. 9 to the ongoing call interface shown in (b) in FIG. 9.

For another example, when the operation for requesting to establish the voice call is the tap operation on the "accept" control 17 shown in (a) in FIG. 15, the confirmation operation for sending the voice call request to the other party shown in (a) in FIG. 16, or the tap operation on the "switch to voice answering" control 19 shown in (a) in FIG. 17, the phone window manager (PhoneWindowManager) updates the UI interface to the ongoing voice call interface.

For still another example, when the operation for requesting to play the voice message is the tap operation on the 1^{st} voice message 22 shown in (a) in FIG. 18, the phone window manager (PhoneWindowManager) updates the UI interface shown in (a) in FIG. 18 to the UI interface on which the 1^{st} voice message is being played and that is shown in (b) in FIG. 18.

S04: The phone window manager (PhoneWindowManager) sends, to the audio manager (AudioManager), a message for invoking an audio service.

It should be noted that an execution sequence of S03 and S04 is not specifically limited in embodiments of this application. For example, S03 is executed before S04, S04 is executed before S03, or S03 and S04 may be executed simultaneously.

S05: The audio manager (AudioManager) invokes the suggested stream volume adjustment (adjustSuggestedStreamVolume) module to set a channel mode and a volume. The suggested stream volume adjustment (adjustSuggestedStreamVolume) module is configured to adjust a volume of a most closely related stream or a given pushback stream.

S06: The suggested stream volume adjustment (adjustSuggestedStreamVolume) module invokes the channel type obtaining (getActiveStreamType) module to obtain a channel type corresponding to the target event.

The channel type obtaining (getActiveStreamType) module may prestore a plurality of channel types, such as a call channel type, a media channel type, and a Bluetooth channel type. When a user operation is triggered to generate different types of events, the channel type obtaining (getActiveStreamType) module determines channel types respectively corresponding to the different types of events, and enters different types of channel modes. For example, if the channel type is the call channel type, a standard channel mode and a private channel mode are entered, and audio is played in the standard channel mode and the private channel mode. If the channel type is the media channel type, a speaker mode is entered, and audio is played in the speaker mode of a speaker. If the channel type is the Bluetooth channel type, a Bluetooth channel mode is entered, and audio is played through a Bluetooth device, for example, a Bluetooth headset, a Bluetooth speaker, or a Bluetooth watch.

S07: The channel type obtaining (getActiveStreamType) module sends the obtained channel type to both the volume setting (adjustStreamVolume) module and the channel mode setting (setMode) module.

S08: The volume setting (adjustStreamVolume) module obtains a prestored historical volume based on the received channel type, and determines a volume (which may be referred to as a first volume) of a current voice call based on the historical volume.

In some embodiments, when it is determined that the channel type of the target event is the call channel type, the volume setting (adjustStreamVolume) module may obtain the prestored historical volume, and determine the volume of the current voice call based on the historical volume. A channel type corresponding to the historical volume is also a call channel type.

For example, for the call channel type, an electronic device may prestore a plurality of volume levels listed in the following Table 1. A volume level 1 is corresponding to a minimum volume value, a volume value corresponding to a volume level 2 is greater than the volume value corresponding to the volume level 1, ..., a volume value corresponding to a volume level N+1 is greater than a volume value corresponding to a volume level N, ..., and a volume level M is corresponding to a maximum volume value.

N is a positive integer greater than 1 and less than M.

**Table 1**

| Volume level | Historical volume | Volume of a current voice call |
|---|---|---|
| 1 | 1 | 1 |
| 2 | 2 | 2 |
| ... | ... | ... |
| N | N | N |
| N+1 | N+1 | N |
| ... | ... | N |
| M | M | N |

Assuming that the volume value corresponding to the volume level N is referred to as a preset volume, the preset volume is greater than the minimum volume, and the preset volume is less than the maximum volume, the volume setting (adjustStreamVolume) module may determine the volume of the current voice call in the following manner: The volume setting module determines whether the historical volume is less than or equal to the preset volume. If the historical volume is less than or equal to the preset volume, the historical volume is used as the volume of the current voice call. For example, if the historical volume is the volume value corresponding to the volume level 2, the volume of the current voice call is the volume value corresponding to the volume level 2. If the historical volume is greater than the preset volume, the preset volume is used as the volume of the current voice call. For example, if the historical volume is the volume value corresponding to the volume level N+1, the volume of the current voice call is the volume value corresponding to the volume level N+1. It should be understood that, when the historical volume is low, the volume of the current voice call may be set to be consistent with the historical volume. This may be more in line with a habit of the user. However, when the historical volume is high, if the volume of the current voice call is set to a large value, privacy of the user may be leaked or other surrounding people may be disturbed. In this case, the volume of the current voice call may be appropriately decreased, so that the current volume does not exceed the preset volume. In this way, hearing experience of the user can be ensured, and privacy and security of the user can be protected.

S09: The channel mode setting (setMode) module sets, based on the received channel type, a channel mode to a channel mode corresponding to the channel type.

In this embodiment of this application, the channel mode setting (setMode) module may store a plurality of channel modes, such as the standard channel mode, the private channel mode, and the speaker mode.

If the received channel type is the call channel type, the channel mode setting (setMode) module sets the channel mode to the standard channel mode or the private channel mode, to play audio in the standard channel mode or the private channel mode. If the received channel type is the media channel type, the channel mode setting (setMode) module sets the channel mode to the speaker mode, to play audio through the speaker. If the received channel type is the Bluetooth channel type, the channel mode setting (setMode) module sets the channel mode to the Bluetooth channel mode, to play audio through the Bluetooth device, for example, a Bluetooth headset, a Bluetooth speaker, or a Bluetooth watch.

After receiving the channel type of the target event, the channel mode setting (setMode) module may determine that the channel type of the target event is the call channel type, and select, from the standard channel mode and the private channel mode, a channel mode that satisfies a condition, that is, automatically set the channel mode to the standard channel mode or the private channel mode.

For example, the channel mode setting (setMode) module may select, from the standard channel mode or the private channel mode based on any one of the following: preset priorities of channel modes, a historical channel mode, or external ambient noise, the channel mode that satisfies the condition.

Example 1: Selecting, based on the preset priorities of the channel modes, the channel mode that satisfies the condition may be implemented in the following manner: determining, if a preset priority of the private channel mode is higher than a preset priority of the standard channel mode, that the private channel mode is the channel mode that satisfies the condition, or determining, if a preset priority of the standard channel mode is higher than a preset priority of the private channel mode, that the standard channel mode is the channel mode that satisfies the condition.

Example 2: Selecting, based on the historical channel mode, the channel mode that satisfies the condition may be implemented in the following manner: determining, if the historical channel mode is the private channel mode, that the private channel mode is the channel mode that satisfies the condition, or determining, if the historical channel mode is the standard channel mode, that the standard channel mode is the channel mode that satisfies the condition.

Example 3: Selecting, based on the external ambient noise, the channel mode that satisfies the condition may be implemented in the following manner: determining, if loudness of the external ambient noise is greater than or equal to preset loudness, that the private channel mode is the channel mode that satisfies the condition, or determining, if loudness of the external ambient noise is less than preset loudness, that the standard channel mode is the channel mode that satisfies the condition.

S10: The volume setting (adjustStreamVolume) module returns the first volume to the audio manager (AudioManager).

S11: The channel mode setting (setMode) module returns the specified channel mode to the audio manager (AudioManager).

S12: The audio manager (AudioManager) determines a sound emitting component corresponding to the specified channel mode. When different channel modes are set, the audio manager (AudioManager) determines different sound emitting components.

For example, sound is played in the standard channel mode through an earpiece, sound is played in the private channel mode through a screen sound emitting device, two sound emitting components, or the like, and sound is played in the speaker mode through the speaker.

S13: An audio manager (AudioManager) sends the specified channel mode and the first volume to the sound emitting component, to control the sound emitting component to play an audio signal based on the specified channel mode and the first volume.

By now, the electronic device has completed automatic setting of the channel mode by using the foregoing S01 to S13. After S01 to S13 are performed, the user may choose to increase or decrease the volume of the electronic device. Correspondingly, the electronic device performs channel mode switching.

The following describes, by using the following S14 to S24, how to set the channel mode when the user increases the volume of the electronic device.

S14: The phone window manager (PhoneWindowManager) receives, through the target application, an operation that is input by the user and that is for increasing the first volume to a second volume. The second volume is greater than the first volume. The operation is a pressing operation performed by pressing a "volume up" button, or a rightward or upward sliding operation on a volume control in settings.

S15: The phone window manager (PhoneWindowManager) sends, to the audio manager (AudioManager), a message for adjusting the volume.

S16: The audio manager (AudioManager) invokes the suggested stream volume adjustment (adjustSuggestedStreamVolume) module to adjust the channel mode and the volume.

S17: The suggested stream volume adjustment (adjustSuggestedStreamVolume) module sends an invocation message to the volume setting (adjustStreamVolume) module through the channel type obtaining (getActiveStreamType) module.

S18: The volume setting (adjustStreamVolume) module increases the first volume to the second volume.

S19: The channel mode setting (setMode) module determines whether a standard channel mode switching condition is satisfied.

For example, the standard channel mode switching condition may include any one of the following:
(1) The second volume is greater than the first volume. To be specific, the channel mode setting (setMode) module may determine that the volume satisfies the standard channel mode switching condition, provided that the channel mode setting (setMode) module detects a volume increase.
(2) A difference between the second volume and the first volume is greater than or equal to a preset difference. To be specific, the channel mode setting (setMode) module may determine that the volume satisfies the standard channel mode switching condition, when detecting that a volume increase amplitude is greater than or equal to the preset difference.
(3) A ratio of the second volume to the first volume is greater than or equal to a preset ratio. To be specific, the channel mode setting (setMode) module may determine that the volume satisfies the standard channel mode switching condition, when detecting that a volume increase amplitude is greater than or equal to the preset ratio.
(4) The second volume is greater than the preset volume. To be specific, the channel mode setting (setMode) module may determine that the volume satisfies the standard channel mode switching condition, when detecting that a changed volume is greater than the preset volume. The preset volume may be the volume value corresponding to the volume level N in Table 1.

S20: The volume setting (adjustStreamVolume) module sets the channel mode to the standard channel mode when the standard channel mode switching condition is satisfied. Otherwise, the channel mode used before the volume increase operation is received is maintained.

Specifically, if the channel mode used before the volume increase operation is received is the standard channel mode, the standard channel mode is maintained after it is determined that the standard channel mode switching condition is satisfied. Alternatively, if the channel mode used before the volume increase operation is received is the private channel mode, the private channel mode is switched to the standard channel mode after it is determined that the standard channel mode switching condition is satisfied.

S21: The volume setting (adjustStreamVolume) module returns the second volume to the audio manager (AudioManager).

S22: The channel mode setting (setMode) module returns the standard channel mode to the audio manager (AudioManager).

S23: The audio manager (AudioManager) determines a sound emitting component corresponding to the standard channel mode.

S24: The audio manager (AudioManager) sends the standard channel mode and the second volume to the sound emitting component corresponding to the standard channel mode, to control the sound emitting component to play the audio signal based on the standard channel mode and the second volume.

In this embodiment of this application, when the user uses the electronic device to perform voice communication such as a call or a voice chat with another device, the electronic device can detect, in real time, whether the user increases or decreases the volume. When the standard channel mode switching condition is satisfied, the user may no longer need to protect private information, and may use the standard channel mode to play sound at a high volume, thereby improving listening experience of the user.

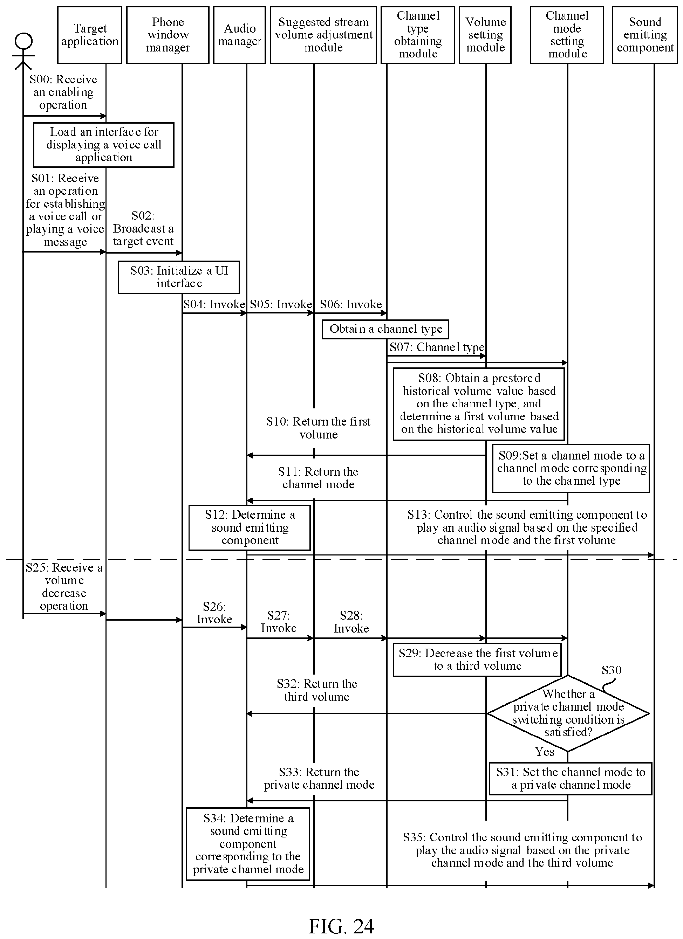

For example, FIG. 24 is a schematic flowchart of another channel mode switching method according to an embodiment of this application. As shown in FIG. 24, the method may include the following S00 to S13, and S25 to S35. S00 to S13 are used to describe how to set a channel mode before a volume adjustment operation of a user is received, and S25 to S35 are used to describe how to set a channel mode after a volume decrease operation of the user is received. For an implementation of S01 to S13, refer to the descriptions of the foregoing embodiment. Details are not described herein again.

The following describes, by using the following S25 to S35, how to set the channel mode when the user decreases the volume of the electronic device.

S25: The phone window manager (PhoneWindowManager) receives, through the target application, an operation that is input by the user and that is for decreasing the first volume to a third volume. The third volume is less than the first volume. The operation is a pressing operation performed by pressing a "volume down" button, or a leftward or downward sliding operation on a volume control in settings.

S26: The phone window manager (PhoneWindowManager) sends, to the audio manager (AudioManager), a message for adjusting the volume.

S27: The audio manager (AudioManager) invokes the suggested stream volume adjustment (adjustSuggestedStreamVolume) module to adjust the channel mode and the volume.

S28: The suggested stream volume adjustment (adjustSuggestedStreamVolume) module sends an invocation message to the volume setting (adjustStreamVolume) module through the channel type obtaining (getActiveStreamType) module.

S29: The volume setting (adjustStreamVolume) module decreases the first volume to the third volume.

S30: The channel mode setting (setMode) module determines whether a private channel mode switching condition is satisfied.

For example, the private channel mode switching condition may include any one of the following:
(1) The third volume is less than the first volume. To be specific, the channel mode setting (setMode) module may determine that the volume satisfies the private channel mode switching condition, provided that the channel mode setting (setMode) module detects a volume decrease.
(2) A difference between the first volume and the third volume is greater than or equal to a preset difference. To be specific, the channel mode setting (setMode) module may determine that the volume satisfies the private channel mode switching condition, when detecting that a volume decrease amplitude is greater than or equal to the preset difference.
(3) A ratio of the first volume to the third volume is greater than or equal to a preset ratio. To be specific, the channel mode setting (setMode) module may determine that the volume satisfies the private channel mode switching condition, when detecting that a volume decrease amplitude is greater than or equal to the preset ratio.
(4) The third volume is less than or equal to the preset volume. To be specific, the channel mode setting (setMode) module may determine that the volume satisfies the private channel mode switching condition, when detecting that a changed volume is less than or equal to the preset volume. The preset volume may be the volume value corresponding to the volume level N in Table 1.

S31: The volume setting (adjustStreamVolume) module sets the channel mode to the private channel mode when the private channel mode switching condition is satisfied. Otherwise, the channel mode used before the volume decrease operation is received is maintained.

Specifically, if the channel mode used before the volume decrease operation is received is the standard channel mode, the standard channel mode is switched to the private channel mode after it is determined that the private channel mode switching condition is satisfied. Alternatively, if the channel mode used before the volume decrease operation is received is the private channel mode, the private channel mode is maintained.

S32: The volume setting (adjustStreamVolume) module returns the third volume to the audio manager (AudioManager).

S33: The channel mode setting (setMode) module returns the private channel mode to the audio manager (AudioManager).

S34: The audio manager (AudioManager) determines a sound emitting component corresponding to the private channel mode.

S35: The audio manager (AudioManager) sends the private channel mode and the third volume to the sound emitting component corresponding to the private channel mode, to control the sound emitting component to play the audio signal based on the private channel mode and the third volume.

It should be understood that, after the user increases the volume, the user may decrease the volume again, and the electronic device enters the private channel mode when the private channel mode switching condition is satisfied. Alternatively, after the user decreases the volume, the user may increase the volume again, and the electronic device enters the standard channel mode when the standard channel mode switching condition is satisfied.

In some embodiments, after the volume setting (adjustStreamVolume) module increases the first volume to the second volume, or decreases the first volume to the third volume, the volume setting (adjustStreamVolume) module may further store the current volume value, namely, the second volume or the third volume. In this way, when the user uses the electronic device to perform voice communication such as a call or a voice chat with another device next time, the electronic device may use the second volume or the third volume as a historical volume value, and set a volume for a next time based on the historical volume value.

In this embodiment of this application, when the user uses the electronic device to perform voice communication such as a call or a voice chat with another device, the electronic device can detect, in real time, whether the user increases or decreases the volume. In a case of the private channel mode switching condition, the private channel mode may be used. This reduces sound leakage of the electronic device, reduces leakage of voice communication content, and can also ensure that listening effect of the user is substantially unchanged. In this way, hearing experience of the user can be ensured, and privacy and security of the user can be protected.

The foregoing embodiments describe, by using a voice call application as an example, how to perform channel mode switching. For audio/video applications such as a music player and a video player, an embodiment of this application further provides another channel mode switching method. The method includes: receiving a triggering operation of a user on an audio/video application icon, and displaying an interface of an audio/video application in response to the operation; and then, receiving a triggering operation of the user on the interface of the audio/video application, and playing an audio/video signal in a standard channel mode or a speaker mode. For example, whether the standard channel mode or the speaker mode is used may be determined by detecting a distance between the user and an electronic device. The standard channel mode is used when the distance is less than a preset distance, or the speaker mode is used when the distance is greater than or equal to a preset distance. Next, the user may adjust a volume of the electronic device. If a volume adjustment operation of the user is received when the audio/video signal is played in the standard channel mode, the audio/video signal is played at an adjusted volume still in the standard channel mode, or if a volume adjustment operation of the user is received when the audio/video signal is played in the speaker mode, the audio/video signal is played at an adjusted volume still in the speaker mode. In other words, when music is played by using the audio/video application, mode switching cannot be performed through volume adjustment, and the volume is only increased or decreased in a specific mode.

It can be understood that, to implement the foregoing functions, the electronic device includes corresponding hardware structures and/or software modules for performing the functions. A person skill in the art should be easily aware that, units and algorithm steps in the examples described with reference to embodiments disclosed in this specification can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

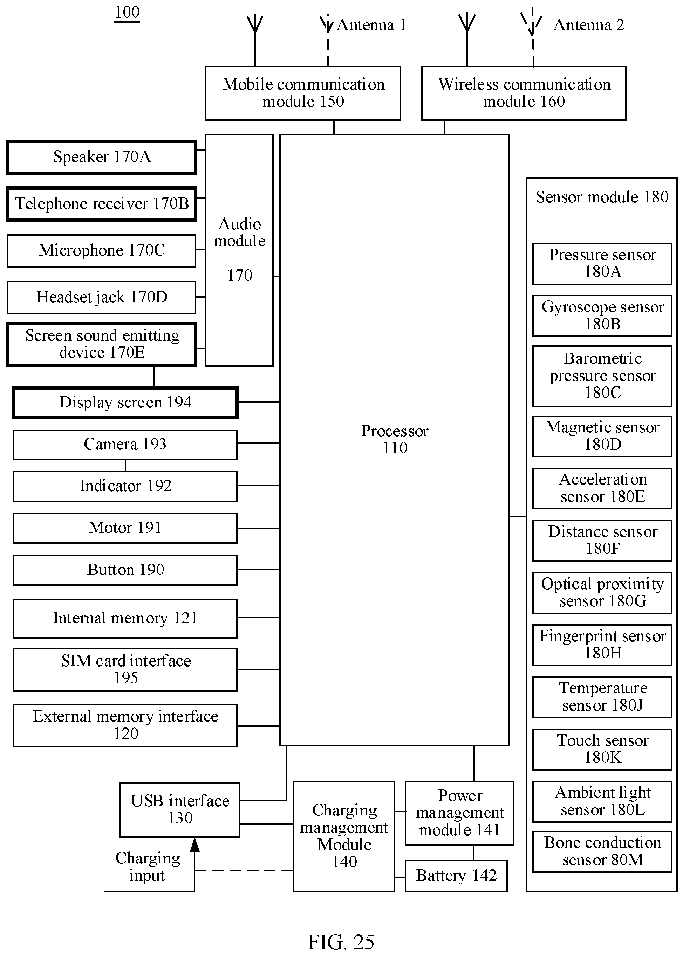

FIG. 25 is a diagram of a hardware structure of an electronic device according to an embodiment of this application.

That the electronic device is a mobile phone 100 is used as an example. As shown in FIG. 25, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, an headset jack 170D, a screen sound emitting device 170E, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a controller, an application processor (application processor, AP), a modem processor, a graphics processing unit (graphics processing unit, GPU), an image signal processor (image signal processor, ISP), a memory, a video codec, a digital signal processor (digital signal processor, DSP), a baseband processor, and/or a neural-network processing unit (neural-network processing unit, NPU). The controller may be a nerve center and a command center of the mobile phone 100. The controller may generate an operation control signal based on instruction operation code and a sequence signal, to control instruction fetching and instruction execution. The processor 110 may be further provided with a memory, configured to store instructions and data.

In this embodiment of this application, the processor 110 is configured to detect, in real time, whether a user increases or decreases a volume. When a specified current volume is low, a private channel mode may be used. This reduces sound leakage, reduces leakage of voice communication content, and can also ensure that listening effect of the user is substantially unchanged. When a specified current volume is high, the user may no longer need to protect private information, and may use a standard channel mode to play sound at a high volume. This improves listening experience of the user.

A wireless communication function of the mobile phone 100 may be implemented by using the antenna 1, the antenna 2, the mobile communication module 150, the wireless communication module 160, the modem processor, the baseband processor, and the like.

The mobile phone 100 implements a display function by using the GPU, the display screen 194, the application processor, and the like. The GPU is a microprocessor for image processing, and is connected to the display screen 194 and the application processor. The GPU is configured to perform mathematical and geometric calculation, and render graphics, for example, render the diagrams of the operation interfaces shown in FIG. 9 to FIG. 21.

The display screen 194 is configured to display an operation interface of a screen projection app, a screen-projected image, a screen-projected video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a quantum dot light-emitting diode (quantum dot light-emitting diode, QLED), or the like. In some embodiments, the mobile phone 100 may include one or N display screens 194, where N is a positive integer greater than 1.

The mobile phone 100 may implement a photographing function by using the ISP, the camera 193, the video codec, the GPU, the display screen 194, the application processor, and the like.

The ISP is configured to process data fed back by the camera 193. For example, during photographing, after a shutter is opened, light is transferred to a photosensitive element of the camera through a lens, an optical signal is converted into an electrical signal, and the photosensitive element of the camera transfers the electrical signal to the ISP for processing, to convert the electrical signal into an image visible to naked eyes. The ISP may further perform algorithm optimization on noise, brightness, and a skin tone of the image. The ISP may further optimize parameters such as an exposure and a color temperature of a photographing scene. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP for converting the electrical signal into a digital image signal. The ISP outputs the digital image signal to the DSP for processing. The DSP converts the digital image signal into an image signal in a standard RGB or YUV format or the like. In some embodiments, the mobile phone 100 may include one or N cameras 193, where N is a positive integer greater than 1.

The digital signal processor is configured to process a digital signal. In addition to a digital image signal, the digital signal processor may process other digital signals. For example, when the mobile phone 100 selects a frequency, the digital signal processor is configured to perform Fourier transform and the like on frequency energy.

The video codec is configured to compress or decompress a digital video. The mobile phone 100 can support one or more types of video codecs. In this way, the mobile phone 100 may play or record videos in a plurality of encoding formats, for example, a moving picture experts group (moving picture experts group, MPEG)-1, MPEG-2, MPEG-3, and MPEG-4.

The external memory interface 120 may be configured to connect to an external memory card, to expand a storage capability of the mobile phone 100. The external memory card communicates with the processor 110 through the external memory interface 120, to implement a data storage function.

The internal memory 121 may be configured to store computer executable program code, where the executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application needed by at least one function (for example, a call application and a third-party communication application), and the like. The data storage area may store data (for example, a current volume value) and the like created during use of the mobile phone 100. In addition, the internal memory 121 may include a high-speed random access memory, and may further include a non-volatile memory, for example, at least one magnetic disk storage device, a flash memory device, or a universal flash storage (universal flash storage, UFS).

The mobile phone 100 may implement an audio function by using the audio module 170, the speaker 170A, the telephone receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The mobile phone 100 may be used for listening to music or answering a hands-free call by using the speaker 170A.

The telephone receiver 170B, also referred to as an "earpiece", is configured to convert an electrical audio signal into a sound signal. When a call is answered or voice information is received by using the mobile phone 100, the telephone receiver 170B may be put close to a human ear to receive a voice.

The microphone 170C, also referred to as a "mic" or a "mike", is configured to convert a sound signal into an electrical signal. When making a call or sending voice information, the user may keep the mouth close to the microphone 170C and speak, to input a sound signal into the microphone 170C. At least one microphone 170C may be disposed in the mobile phone 100. In some other embodiments, two microphones 170C may be disposed in the mobile phone 100, to collect a sound signal and implement a noise reduction function. In some other embodiments, three, four, or more microphones 170C may be alternatively disposed in the mobile phone 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The screen sound emitting device 170E may be any device that can produce controllable vibration, for example, a piezoelectric ceramic exciter or a voice coil exciter, and is configured to drive the display screen 194 to vibrate, so that the display screen 194 emits sound.

It can be understood that the structure illustrated in this embodiment of this application does not constitute any specific limitation on the mobile phone 100. In some other embodiments of this application, the mobile phone 100 may include more or fewer components than those shown in the figure, a combination of some components, splitting of some components, or a different arrangement of the components. The components shown in the figure may be implemented by hardware, software, or a combination of software and hardware.

An embodiment of this application further provides a computer-readable storage medium. The computer-readable storage medium stores computer instructions. When the computer-readable storage medium runs on an electronic device, the electronic device is enabled to perform the method described above. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium, a semiconductor medium (for example, a solid state disk (solid state disk, SSD)), or the like.

An embodiment of this application further provides a computer program product. The computer program product includes computer program code. When the computer program code is run on a computer, the computer is enabled to perform the methods in the foregoing embodiments.

An embodiment of this application further provides a chip. The chip is coupled to a memory. The chip is configured to execute a computer program or instructions stored in the memory, to perform the methods in the foregoing embodiments. The chip may be a general-purpose processor or may be a special-purpose processor. In some embodiments, the chip includes a processor, a transceiver, and a storage medium. The processor is configured to support an electronic device in performing the technical solutions described above. The transceiver is controlled by the processor, and is configured to support the electronic device in performing the technical solutions described above.

It should be noted that the chip may be implemented by using the following circuits or components: one or more field programmable gate arrays (field programmable gate arrays, FPGAs), a programmable logic device (programmable logic device, PLD), a controller, a state machine, a gate logic, a discrete hardware component, any other proper circuit, or any combination of circuits capable of executing various functions described in this application.

The electronic device, the computer-readable storage medium, the computer program product, and the chip that are provided in embodiments are all configured to perform the methods provided above. Therefore, for beneficial effects thereof, refer to the beneficial effects corresponding to methods provided above. Details are not described herein again.

It should be understood that the foregoing descriptions are merely intended to help a person skilled in the art better understand embodiments of this application, but not to limit the scope of embodiments of this application. A person skilled in the art obviously can make various equivalent modifications or changes based on the given examples. For example, some steps in various embodiments of a detection method may be unnecessary or some steps may be newly added. Alternatively, any two or more of the plurality of embodiments may be combined. A modified, changed, or combined solution also falls within the scope of embodiments of this application.

It should also be understood that, "greater than" may be replaced with "greater than or equal to", and "less than or equal to" may be replaced with "less than"; or "greater than or equal to" may be replaced with "greater than", and "less than" may be replaced with "less than or equal to".

It should also be understood that sequence numbers of the foregoing processes do not mean execution sequences. The execution sequences of the processes should be determined according to functions and internal logic of the processes, and should not be construed as any limitation on the implementation processes of embodiments of this application.

It should also be understood that in embodiments of this application, "presetting" and "predefinition" may be implemented by prestoring corresponding code or a corresponding table in a device (for example, an electronic device) or implemented in another manner that can be used to indicate related information. A specific implementation thereof is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel mode switching method, applied to an electronic device, wherein the method comprises:
receiving a first operation of a user;
displaying an interface of a call application in response to the first operation;
receiving a second operation of the user;
playing a voice signal of the call application at a first volume in response to the second operation;
receiving a third operation of the user; and
when the third operation is an operation for increasing the first volume to a second volume, playing the voice signal at the second volume in a standard channel mode in response to the third operation, or when the third operation is an operation for decreasing the first volume to a third volume, playing the voice signal at the third volume in a private channel mode in response to the third operation; wherein
when the electronic device plays the voice signal at a fourth volume in the standard channel mode, loudness at a first location is first loudness; when the electronic device plays the voice signal at a fifth volume in the private channel mode, loudness at the first location is second loudness; and a distance between the first location and the electronic device is greater than or equal to a preset distance, the second loudness is less than the first loudness, and the fourth volume is the same as the fifth volume.

2. The method according to claim 1, wherein the first loudness and the second loudness satisfy the following relationship: a difference between the first loudness and the second loudness is greater than or equal to a first difference.

3. The method according to claim 2, wherein when the electronic device plays the voice signal at the fourth volume in the standard channel mode, loudness at a second location is third loudness; when the electronic device plays the voice signal at the fifth volume in the private channel mode, loudness at the second location is fourth loudness; and a distance between the second location and the electronic device is less than the preset distance; and
the third loudness and the fourth loudness satisfy the following relationship: a difference between the third loudness and the fourth loudness is less than or equal to a second difference, and the second difference is less than the first difference.

4. The method according to claim 1, wherein the method comprises:
receiving a fourth operation of the user;
displaying an interface of a first application in response to the fourth operation, wherein the first application is a non-call application installed on the electronic device;
receiving a fifth operation of the user;
playing an audio/video signal in the standard channel mode or a speaker mode in response to the fifth operation; and
if a sixth operation of the user for volume adjustment is received when the audio/video signal is played in the standard channel mode, playing the audio/video signal at an adjusted volume still in the standard channel mode in response to the sixth operation, or if a seventh operation of the user for volume adjustment is received when the audio/video signal is played in the speaker mode, playing the audio/video signal at an adjusted volume still in the speaker mode in response to the seventh operation.

5. The method according to claim 4, wherein the first application is any one of the following: a music player, a video player, a game application, and a map application with a voice navigation function.

6. The method according to any one of claims 1 to 5, wherein the call application is any one of the following: a phone application, a voice chat application, a video chat application, and a social application with a voice message function.

7. The method according to any one of claims 1 to 6, wherein
the playing a voice signal of the call application at a first volume in response to the second operation comprises:
in response to the second operation, generating a first event of playing the voice signal;
when it is determined that a channel type of the first event is a call channel type, obtaining a historical volume, determining the first volume based on the historical volume, and setting a channel mode to the standard channel mode or the private channel mode, wherein the historical volume is a volume at which a voice signal of the call application is played in response to a previous event of the first event, and the first volume is less than or equal to the historical volume; and
playing the voice signal at the first volume in the standard channel mode or the private channel mode.

8. The method according to claim 7, wherein
the determining the first volume based on the historical volume comprises:
using the historical volume as the first volume if the historical volume is less than or equal to a preset volume; or
using a preset volume as the first volume if the historical volume is greater than the preset volume; wherein
the preset volume is greater than a minimum volume of the call application, and the preset volume is less than a maximum volume of the call application.

9. The method according to claim 7, wherein
the setting a channel mode to the standard channel mode or the private channel mode comprises:
selecting, from the standard channel mode or the private channel mode based on preset priorities of channel modes, a historical channel mode, or external ambient noise, a channel mode that satisfies a condition, and using the channel mode that satisfies the condition, wherein the historical channel mode is a channel mode used when the voice signal of the call application is played in response to the previous event of the first event.

10. The method according to claim 9, wherein
the selecting, from the standard channel mode or the private channel mode based on preset priorities of channel modes, a historical channel mode, or external ambient noise, a channel mode that satisfies a condition comprises:
when selecting, based on the preset priorities of the channel modes, the channel mode that satisfies the condition, determining, if a preset priority of the private channel mode is higher than a preset priority of the standard channel mode, that the private channel mode is the channel mode that satisfies the condition, or determining, if a preset priority of the standard channel mode is higher than a preset priority of the private channel mode, that the standard channel mode is the channel mode that satisfies the condition; or
when selecting, based on the historical channel mode, the channel mode that satisfies the condition, determining, if the historical channel mode is the private channel mode, that the private channel mode is the channel mode that satisfies the condition, or determining, if the historical channel mode is the standard channel mode, that the standard channel mode is the channel mode that satisfies the condition; or
when selecting, based on the external ambient noise, the channel mode that satisfies the condition, determining, if loudness of the external ambient noise is greater than or equal to preset loudness, that the private channel mode is the channel mode that satisfies the condition, or determining, if loudness of the external ambient noise is less than a preset loudness, that the standard channel mode is the channel mode that satisfies the condition.

11. The method according to any one of claims 1 to 10, wherein
the playing the voice signal at the second volume in a standard channel mode in response to the third operation comprises:
playing the voice signal at the second volume in the standard channel mode in response to the third operation if it is determined that the second volume satisfies a standard channel mode switching condition; wherein
the standard channel mode switching condition comprises any one of the following:
the second volume is greater than the first volume;
a difference between the second volume and the first volume is greater than or equal to a preset difference;
a ratio of the second volume to the first volume is greater than or equal to a preset ratio; and
the second volume is greater than the preset volume.

12. The method according to claim 11, wherein
if a channel mode used before the third operation is received is the standard channel mode, after it is determined that the standard channel mode switching condition is satisfied, the method further comprises: maintaining the standard channel mode; or
if a channel mode used before the third operation is received is the private channel mode, after it is determined that the standard channel mode switching condition is satisfied, the method further comprises: switching from the private channel mode to the standard channel mode.

13. The method according to any one of claims 1 to 10, wherein
the playing the voice signal at the third volume in a private channel mode in response to the third operation comprises:
playing the voice signal at the third volume in the private channel mode in response to the third operation if it is determined that the third volume satisfies a private channel mode switching condition; wherein
the private channel mode switching condition comprises any one of the following:
the third volume is less than the first volume;
a difference between the first volume and the third volume is greater than or equal to a preset difference;
a ratio of the first volume to the third volume is greater than or equal to a preset ratio; and
the third volume is less than or equal to the preset volume.

14. The method according to claim 13, wherein
if a channel mode used before the third operation is received is the private channel mode, after it is determined that the private channel mode switching condition is satisfied, the method further comprises: maintaining the private channel mode; or
if a channel mode used before the third operation is received is the standard channel mode, after it is determined that the private channel mode switching condition is satisfied, the method further comprises: switching from the standard channel mode to the private channel mode.

15. The method according to any one of claims 1 to 14, wherein the voice signal is a voice message; and
the playing a voice signal of the call application at a first volume in response to the second operation comprises:
in response to the second operation, detecting whether the user exists within a preset range with the electronic device as a center; and
when the user exists within the preset range, selecting, from the standard channel mode or the private channel mode, a channel mode that satisfies a condition, and playing the voice message in the channel mode that satisfies the condition; or
when the user does not exist within the preset range, playing the voice message at a sixth volume in the speaker mode, wherein the sixth volume is greater than the first volume, the second volume, and the third volume.

16. The method according to claim 15, wherein the channel mode that satisfies the condition is the private channel mode; and
the method further comprises:
after the voice message is played in the private channel mode, if a volume increase operation is not received and the user exists within the preset range, playing, still in the private channel mode, a voice message received after the voice message; or
after the voice message is played in the private channel mode, if a volume increase operation is received, the standard channel mode switching condition is satisfied, and the user exists within the preset range, playing, in the standard channel mode, a voice message received after the voice message; or
after the voice message is played in the private channel mode, if a volume increase operation is received, the standard channel mode switching condition is not satisfied, and the user exists within the preset range, playing, still in the private channel mode, a voice message received after the voice message; or
after the voice message is played in the private channel mode, if the user does not exist within the preset range, playing, at the sixth volume in the speaker mode, a voice message received after the voice message.

17. An electronic device, comprising a processor, a communication interface, and a memory coupled to the processor and the communication interface, wherein the memory stores instructions, and when the processor execute the instructions, the electronic device is enabled to perform the channel mode switching method according to any one of claims 1 to 16.

18. A computer-readable storage medium, wherein the computer-readable storage medium stores a computer program, and when the computer program is run on an electronic device, the electronic device is enabled to perform the channel mode switching method according to any one of claims 1 to 16.
